# EUROPEAN PATENT SPECIFICATION

(11) **EP 2 575 426 B1**
(45) Date of publication and mention of the grant of the patent: **09.09.2015**
(21) Application number: 11791740.1
(22) Date of filing: 27.05.2011
(51) Int. Cl.: A01G 9/02, B65D 21/028, B65D 21/036, B67B 7/00, B65D 19/38, B65D 21/04, B65D 21/032, B65D 43/03, B65D 21/02, B65D 51/28

(54) **STACKABLE CONTAINERS AND ASSOCIATED METHOD FOR THE TRANSPORT OF PLANTS**
STAPELBARE CONTAINER UND ENTSPRECHENDES VERFAHREN FÜR DEN TRANSPORT VON PFLANZEN
SYSTÈMES, COMPOSANTS ET PROCÉDÉS DE PLANTATION

(30) Priority: 07.06.2010 AU 2010902483; 15.06.2010 AU 2010902610; 16.02.2011 AU 2011900524
(43) Date of publication of application: 10.04.2013
(73) Proprietor: Australian Growing Solutions Pty Ltd, Tyabb, VIC 3913 (AU)
(72) Inventor: WARD, David, Glenn, Tyabb Victoria 3913 (AU)
(74) Representative: Cohausz & Florack
(86) International application number: PCT/AU2011/000638
(87) International publication number: WO 2011/153577

(56) References cited:
- EP-A2- 0 672 590
- WO-A1-00/18215
- DD-A- 55 585
- DE-U1- 9 214 495
- DE-U1- 9 308 502
- GB-A- 2 091 538
- JP-A- 2000 032 840
- US-A- 1 277 946
- US-A- 2 554 948
- US-A- 4 466 217
- US-A- 4 658 541
- US-A- 4 982 858
- US-A- 5 492 070
- US-A1- 2008 078 119
- US-A1- 2008 110 086
- US-B1- 6 415 549
- US-B1- 6 612 073
- US-B1- 7 020 997
- US-B1- 7 043 877
- US-B2- 6 968 948

## Description

### FIELD OF THE INVENTION

The present invention relates to planting systems including containers, and parts of containers of the type for containing plant growing materials.

In one form, the present invention relates to a closure for a planter container according to the preamble of claim 1.

In one form, the present invention relates to a transport module having a multitude of combinations of said closures and containers in stacked relationship with each other.

The present invention finds particular application as an overall process of and individual components for a compost or potting mix filling operation and/or transportation operation including automatically filling a planter pot with suitable compost, potting mix or other plant growing material, forming a void in the plant growing material and maintaining the void during transportation of the pot, stacking a multitude of pots as part of a substantially self supporting array of similar pots in which the pots of the array cooperate together for delivery to a plant grower, where a seed, seedling, plug, tube plant or other young plant can be inserted into the void for sale to the ultimate customer.

It is to be noted that although the present invention will be described with particular reference to one or more embodiments, each of the described embodiments are examples of forms of the invention and accordingly, the scope of the present invention is not limited to the described embodiments, but rather the scope of the invention is more extensive so as to include other forms and arrangements of the containers and their components, other methods of introducing material to the containers, other methods of transporting the containers, and other methods of forming voids within the containers, as well as the use and application of the containers for other purposes.

The scope of the invention is defined by the appended claims.

### BACKGROUND OF THE INVENTION

Plants are most usually sold in pots at retail or wholesale outlets in which the pots containing the plants for sale are produced by growers and nurseries. The existing techniques of producing planter pots containing a plant and/or transplant is fragmented into a range of different steps carried out by different organisations or traders, each usually performing one step or a limited number of steps in the overall process from initially making the plant growing medium to ultimately supplying the plant or transplant in the pot to the customer such as selling the potted plant to a customer in a retail environment. In many instances, one entity produces the compost, another entity may fill the container with the compost, another trader plants the seed or seedling in the container and others are involved in distributing the plants or transplants in the containers into retail environments, such as shops, nurseries or the like for sale to the ultimate consumer. Such a fragmented approach has a number of problems, such as for example, all of the steps in the overall process need coordinating both geographically and temporally so that they happen in sequence at the correct place and time with the right people being present, requiring the relevant experienced workforce to be deployed as needed. Often this is difficult to arrange because of the many variables associated with performing the steps in sequence, often at different locations and maintaining a motivated workforce.

Another problem associated with existing techniques is that each grower of the plants or transplants is required to have their own pot filling production facility dedicated to filling individual pots from a bulk supply of compost that had been delivered previously from a compost producer/supplier and a further facility for introducing the plant into the pot such as a plant installation facility dedicated to adding the growing item in the form of a seed, seedling, plug or tube plant into the compost filled pot. Additionally, the plant grower often provides plants in different sized pots which require machinery that is able to accommodate the different sized pots. In such systems there is usually a lack of coordination and an amount of duplication of effort, resources, and of cost for individual growers to plant and/or transplant their own growing items into the pots containing compost, particularly when the compost filling and planting production facility remains idle for most of the year, being used only at certain times in the year to plant and/or transplant seasonal plants in accordance with changes in the seasons. Thus, expensive machinery is left idle most of the time which adds to the cost of production for the growers and nurseries.

Thus, there is a need to have a more coordinated and efficient approach to filling pots with compost, potting mix and other growing materials as well as transporting the pots when filled with potting mix and adding growing items to the pots for sale to consumers.

Associated with the above indicated problems of producing planter pots containing plants for sale, is a further problem relating to the transportation of the pots when filled with compost. This further problem relates to being able to transport the pots economically without spilling compost from the pots, contaminating the compost, damaging the pots themselves, or any combination thereof, all of which increase the cost of producing plants in pots for sale. Generally, existing available pots can be nested one within the other for transportation only when the pots are empty. However, when the pots are substantially full of potting mix or compost, the pots cannot be nested one within the other so that when stacked in vertical columns, the stack of pots is unstable and often collapses as the position of the upper pots sways outside the edges of the lower pots resulting in the centre of gravity of the stack of pots moving outside the base of the lower pots resulting in collapse of the column of pots. Thus, existing pots can only be transported as a single layer of pots or at most, only two or three layers located one upon the other, both of which are uneconomical for transporting large number of pots, particularly by road, owing to the amount of space required. Therefore, there is a need to be able to transport pots containing growing medium more economically with reduced risk of damage to either the pots, the compost, or both.

One method of preventing spillage of the contents of the pot during transportation is to provide a closure for the pot either a separate closure such as a lid, or a closure that is part of the pot, such as for example the base of a pot stacked upon another open topped pot at a lower level. However, if closures are provided on the pots during transportation to prevent spillage, the same closures are required to be removed from the pots prior to the plants or seedlings being planted in the pots. Removing manually each separate closure from each individual pot is inefficient, labour intensive and time consuming since each lid must be released from the pot, removed from the pot entirely and located remote from the pot in order to allow unencumbered access to the pot for planting. Thus, there is a need to remove the closure from the pots in a more effective manner.

WO 00/18215 discloses a closure for a container containing plant growing materials according to the preamble of claim 1.

Accordingly, it is an aim of the present invention to provide a closure for a container that allows adjacent similar closures to be interlockingly interconnected together to form a stable array or assemblage.

Accordingly, it is an aim of the present invention to provide a transport module to assist in transporting an array of pots in stacked relationship to each other.

It is to be noted that not all embodiments of the present invention satisfy all of the aims of the invention. Some embodiments will satisfy one aim and other embodiments may satisfy another aim. Some embodiments may satisfy two or more aims.

### SUMMARY OF THE INVENTION

According to one aspect of the present invention there is provided a closure for a container in which the closure interacts with a first container and a second container when the two containers are in stacked relationship one above the other, the closure for sealing the first container and for locating the base of the second container with respect to the first container, wherein the containers are planter pots for containing plant growing materials, characterised in that the closure comprises a cover portion having a former for forming and maintaining a void within the contents of the container when the container is provided with contents, and the former contacts the contents of the container, an edge portion located at or towards the peripheral portion of the closure for facilitating sealing of the container and for locating the first container with respect to at least one other container in an array of similar containers, and at least one spacer member for guiding the positioning of the second container with respect to the first container when the first and second containers are in stacked relationship with the base of the second container located on the first container to facilitate formation of an array or assemblage of the first and second containers as part of an array of similar containers for transportation of the containers in a module of similar containers in which the containers are stably mounted in stacked relationship with each other during transportation of the module and the former is in contact with the contents of the container.

According to another aspect of the invention, there is provided a transport module having a multitude of separate combinations of closures and containers in stacked relationship with each other, in which each container is a planter pot containing plant growing material and the closure is in accordance with any one of claims 1 to 11, the module comprising a support for supporting the module, a first retaining member locatable upon the support, said first retaining member having a multitude of first retaining elements for retaining a first layer of the containers and closures in place on the first retaining member, and a second retaining member having a multitude of second retaining members for retaining respective ones of a second layer of the containers and closures wherein the first and second layers of containers and closures are located intermediate the first and second retaining members so that the first and second retaining elements cooperatively interact with the respective layers of containers and closures to maintain the layers of containers and closures in stacked relationship to each other.

### BRIEF DESCRIPTION OF ASPECTS OF THE INVENTION

The plant growing medium can be any suitable medium, such as for example, compost, potting mix, particulate material, humus, humate, artificial soil, synthetic soil substitutes, vermiculite, formulated granulated material, including combinations of two or more materials.

The plant growing material includes additives to enhance the growing qualities of the plant, including additives such as for example, nutrients, fertilisers, wetting agents, pesticides, insecticides, aerating compounds and the like. In one form, the potting mix is formulated to the requirements of the particular species or type of plant to be planted in the pot containing the potting mix, such as for example, roses, azaleas, Australian native plants or the like.

The plant or other growing item to be planted into the pot can take any suitable form and be of any suitable type such as for example, a seed, seedling, plant, plug, tube or the like. The plant can be a flower, vegetable, tree, bush or the like.

The container can take any suitable or convenient form that allows two or more containers to be stacked substantially vertically or located substantially horizontally. Typically, the container is in the form of an open top pot, preferably having a tapering side wall surface from a relatively larger size at the top to a relatively smaller size at the base for allowing nesting of pots when empty.

Typically, the pots may be of any suitable size or shape, such as cylindrical, conical, square, rectangular or the like in which the side to side width of the pot is greater at the top than at the base. More typically, the pots are provided with a rim arrangement, typically in the form of one or more rim elements. In one form, the rim elements are the rim itself or are connected to or extend from the rim. Typically, the rim or rim elements are curved. However, in other forms, the rim elements are straight, such as for example, the sides of a straight sided pot. In one form, the rim is continuous, segmented, discontinuous, provided with sections, castellated, has sectors or segments, or is provided with separate spaced apart contact or connector parts or similar. The separate spaced apart contact or connector parts can be spaced axially and/or circumferentially from each other.

In one form, the container is provided with one or more projections, typically one or more outwardly extending projections, more typically, one or more radially outwardly projecting spacers or similar. The purpose or function of the spacer is to allow the pots to be close packed together with the spacers in abutting relationship to one another but defining a gap between the rim portions so that the rim sections or parts of adjacent pots are spaced from one another sufficiently to allow the engaging elements of a base of the upper pots to be received therein so that the rim elements and engaging elements cooperatively engage with each other to form the substantially self supporting array.

Typically, the container is provided with a base, preferably a closed base. However, the base can be provided with vents, holes, apertures, slots or similar for drainage, aeration or other purpose or the like.

In one form, the base is provided with a projection, protrusion, or other outwardly extending engaging element. Typically, the projection is in the form of a ridge or ridge element. The ridge element may be a single element or a plurality of elements. The element or elements may take any suitable shape or form or be arranged in any suitable configuration. The shape may be a simple shape or a complex shape. The ridge element may be straight, curved, rectilinear, in the form of a closed loop, or continuous or endless loop. In one form, the surfaces of the ridge element are smooth or have a smooth or gradual transition, or be cusp-like having an angularly changing shape, such as an opposed hyperbolic shape or the like.

In one form, the ridge elements may be of a constant size, such as a constant width, constant length, or the like or may be of a variable size, such as for example, may taper towards their distal end.

In one form, the ridge or ridge elements are diamond shaped with curved sides. More typically, the curvature of the sides of the diamond shape correspond to the curvature of the rim or rim portion so that the curved sides cooperatively engage with the rim or rim portion.

In one form, the cooperative engagement includes the two projections being arranged in side by side relationship so that the projection on the base of the upper pot is located between at least two adjacent rim portions of at least two adjacent lower pots to stop lateral movement of the pots with respect to each other.

In one form, the base projection is clipped or physically engages with one or other rim portions so that the base portion is connected to two or more rim portions to form an array of interconnected pots with rims and base projections clipped or otherwise joined together at a plurality of locations.

In one form, the cooperative engagement is an interlocking arrangement. One form of the interlocking arrangement is in the form of a plurality of tongues, tabs, projections, flanges or other projections or protuberances, or the like whereas the complementary element is in the form of one or more grooves, cracks, rebates, channels, slots, gaps, voids, or the like which engage with each other to connect the projections on the base of the upper pot to the rim on the lower pot or pots.

In one form, the containers in the form of pots are stacked in columns one upon the other, preferably in staggered columns, and more preferably in regularly repeating alternating staggered columns in which one set of pots are aligned with each other and another set of pots are aligned with each other to form the interlocking array.

In one form, the container is provided with a planting region or defined space. In one form, the planting region is in the form of a lack of planting medium or absence of planting media.

In one form, the lack or absence of planting medium is a void, gap, bore, space, cavity, chamber, depression or the like. In one form, the void or bore is columnar, conical, tapered, shallow, round, elliptical, circular, or any suitable shape.

In one form, the void is substantially of constant size over its length, whereas in other forms, the void is of variable size, such as for example, over its length including tapering from a relatively large size at the top of the bore to a relatively small size at the closed or blind end of the bore. The void can be of any suitable size, shape, configuration, length, profile or the like depending upon what is to be planted in the void and how the item is to be planted, i.e. having a bulbous root structure or similar.

In one form, the void is formed mechanically using a suitable former. In one form, the former is a punch, mandrel, drill, shaft, rod, auger or the like. In one form, the void is formed mechanically, such as by vibration or movement of the plant growing medium, including oscillatory movement, reciprocating movement, or combinations of movement in a variety of different directions such as a combination of rotary and reciprocal improvements. One particular preferred form of forming the void is rotary movement to drill or auger through the potting mix.

In one form, the former is inserted into the pot from above to form the void in a downwards direction. In one form, the former extends from the base of the pot, typically along the central axis of the pot to form the void axially along the central axis of the pot from below in an upwards direction.

In one form, there may be more than a single void formed in the pot such as for example, two or more voids if more than a single item is to be planted in the pot, i.e. a group of seedlings for replanting to a conventional garden bed or the like.

In one form, the container is provided with a closure. The closure may be integral with the container by being hinged thereto or may be separate thereto and be removable from the container such as for example by being releasably securable to the open top of the container.

In one form, the closure is in the form of a lid, cover, cap, seal, top, covering or the like.

In one form, the lid is substantially circular. However, any suitable or convenient shape is possible such as square, rectangular, or the like, particularly having rounded corners. The shape of the closure corresponds to the shape of the opening of the pot and/or to the shape of the pot.

In one form, the lid is or has a part which is planar or has a disc-like configuration, typically, towards the outer periphery of the lid.

In one form, the container is a receptacle, vessel, enclosure, compartment, canister, cask, capsule or the like. In one form, the container is a pot, preferably a planter pot for containing a growing plant. In one form, the container is a planter pot for containing a plant growing material, such as for example, potting mix, compost, soil, substitute soil, artificial soil, natural soil, synthetic soil or the like.

In one form, the former is centrally located on the cover part of the lid or similar. In one form, the former extends from one surface, preferably, the undersurface of the lid to extend into the interior of the container when the lid is on the container. In one form, the former maintains the void or bore in the potting mix once the void or bore has been formed.

In one form, the former is substantially hollow being in the form of a tube or well formed in the centre of the cover. In one form, the tube is cylindrical, has a square or rectangular cross-section or similar. However, the former can adopt any suitable or convenient form to make and/or maintain the void in the contents of the container, particularly in the compost or potting mix in the planter pot until a seedling or plant has been placed in the void.

In one form, the former corresponds in shape, size and configuration to a tube or plug of a plant, seedling or similar which is to be received in the void produced by the former so that the void formed or maintained by the former is of a shape to receive the plant, seedling tube or the like.

In one form, the closure in the form of a lid or cover is provided with an edge portion, a rim portion or similar for cooperatively engaging with the upper circumferential edge of the pot, typically for securably locating the lid onto the top of the pot to secure the contents of the pot, and more typically, positively mounting the lid to the pot, such as snap-lockingly mounting the lid to the pot.

In one form, the lid or cover is a disc or has a disc-like shape in which the former is located at the centre of the circular disc. In one form, the former is a four sided reamer having a substantially square cross-section.

In one form, the rim of the lid is provided with an edge portion that extends part way around the edge whereas in another form, the edge portion extends all of the way around the edge, such as for example being circumferential. In one form, the circumferential edge portion is a flange, lip, rim or similar.

In one form, the rim portion is a substantially U-shape having an inner wall and an outer wall with a shelf located intermediate the inner and outer walls defining a U-shaped groove, rebate, channel, chamber, concavity or similar. In one form, the rim portion is provided with engaging elements for allowing the rim of the lids of adjacent pots to cooperate with each other, such as for example, to interconnect two adjacent pots together. In one form there are four engaging elements in spaced apart relationship to each other around the edge of the lid.

In one form, one or more engaging elements are located on the peripheral edge of the cover or closure. In one form, there are two or more separate engaging elements. In one form, the at least two engaging elements are located in spaced apart relationship to each other, typically in diametrically opposed spaced apart relationship. In one form, the engaging element is in the form of a clip, clasp, nib, catch, projection, extension, tab, flange, hook or the like.

In one form, each lid has two different types of engaging elements in addition to the normal rim of the lid. In one form, one or more of the engaging elements is in a first configuration whereas one or more other engaging elements are in a second configuration. Typically, the two configurations are different to one another, more typically, complementary to one another, such as for example oppositely oriented to one another to cooperatively engage with one another, typically to interlock with each other. In one form, the clips are in a tray like orientation provided with a floor whereas in a different configuration the clips are in a roof like configuration provided with an overhanging ceiling or similar defining a void or space thereunder.

In one embodiment, one form of the clips is in the form of upturned flanges and the other form of the clips is in the form of downturned flanges. Typically, the flanges are complementary to one another such that the upturned flange is received within the downturned flange to securely interconnect the clips to each other, and also the lids and the pots to which the lids are attached.

In one form, the clips of a cover fitted to a first container overlies the rim of the cover fitted to a second container so as to securely connect the first and second container to each other.

In one form, one or more of the clips of a first lid fitted to a first container cooperatively engages with the underside of a clip of a second lid fitted to a second container and one or more of the clips of the lid fitted to the first container overlies the rim of the lid fitted to a third container simultaneously with the second container to interlockingly connect the first, second and third containers into an array or assemblage of containers to secure the containers as a unit or assembly for ease of transportation.

In one form, the engaging element is in the form of a fastener, typically an interlocking fastener, and more typically, a releasable interlocking fastener, such as for example, a clip, hook or similar. In one form, the clip or hook is of an arcuate or generally curved shape or profile. In one form, the clip is an arc of a circle, typically having a radius of curvature corresponding to the radius of curvature of the rim of the lid. In one form, the direction of curvature is the same as the direction of curvature of the circumference of the lid. In another form, the direction of curvature of the clips or fastener is opposite to the direction of curvature of the lid from which the fastener extends.

In one form, the rim or edge of the lid is convexly curved whereas the fastener is concavely curved.

In one particularly preferred form of the lid, there are two upwardly directed fasteners or clips located next to each other, typically in the same semicircular part of the lid, and two downwardly directed fasteners or clips located next to each other, typically in the other semicircular part of the lid, arranged in groups of two identical clips extending from the rim of the lid so that the four clips in pairs are arranged at about 90° to one another to extend radially from the rim or lip of the lid to interlockingly connect with up to four individual pots to form an interlockingly interconnected array of pots in the same layer or level of pots.

In one form, the transport module includes one or more retaining members having retaining elements. Typically, the pots in stacked array are located intermediate two spaced apart retaining members. In one form, the retaining member is a stabilising member, typically in the form of a plate, panel, board, sheet, partition, divider or similar. More typically, the stabilising plate is planar having an obverse face and a reverse face.

Typically, the first set of retaining elements is located on one face, either the obverse face or reverse face. In one form, the first set of retaining elements are voids, cut-outs, apertures, holes, depressions, grooves, rebates or the like. Typically, the apertures are circular. However, other shapes are possible. More typically, the circular apertures are of a size at least as great as one of the dimensions of the container, either the base diameter or lid diameter. In one form, the circular base of the pots is received in respective circular apertures to retain the pots against excessive lateral or radial movement, particularly during transportation.

In one form, the stabilising member is provided with a second set of retaining elements. In one form, the second set of retaining elements are projections raised above the planar face of the stabilising plate. Typically, the projections are bosses, discs, lands, protrusions, plateaus or the like. More typically, the projections are circular. In one form, the discs are solid. However, in other forms, the projections are in the form of fingers, bosses or the like in spaced apart relationship to each other to be received with the depression of the lid.

In one form, the individual spaced apart elements or projections contact the depression of the lid to retain the lid in place by engaging against the inner rim or flange of the lid to prevent unwanted or excessive sideways or radial movement of the lid and hence the pot, particularly during transportation.

In one form, the size and shape of the projections corresponds to the size and shape of the depression of the lid.

Typically, in one form of the retaining member, the apertures are located on one side of the stabilising plate and the projecting discs extend from the other side of the stabilising plate. Typically, the apertures face upwards in use to receive the bases of the pots, and the discs extend downwards in use to be received in the recess or depression of the lid.

In one form, the projections in the form of solid discs or spaced apart elements are received in the depressions of the lids of the pots. Typically, the diameter of the discs protruding from the plane of the plate is less than the diameter of the depression of the lid so as to be received within the lid to prevent excessive lateral and/or radial movement of the lid and hence the pot.

In one form, two or more layers of pots, typically, four or five layers of pots are sandwiched between an upper and a lower stabilising plate in which the array of pots are interconnected to one another to form a stable array of pots, typically by the bases of the upper of two layers being received in the lids of the lower of the two layers.

### BRIEF DESCRIPTION OF THE DRAWINGS

Aspects of embodiments illustrating the invention in a non limiting manner will now be described by way of non-limiting examples with reference to the accompanying drawings in which:

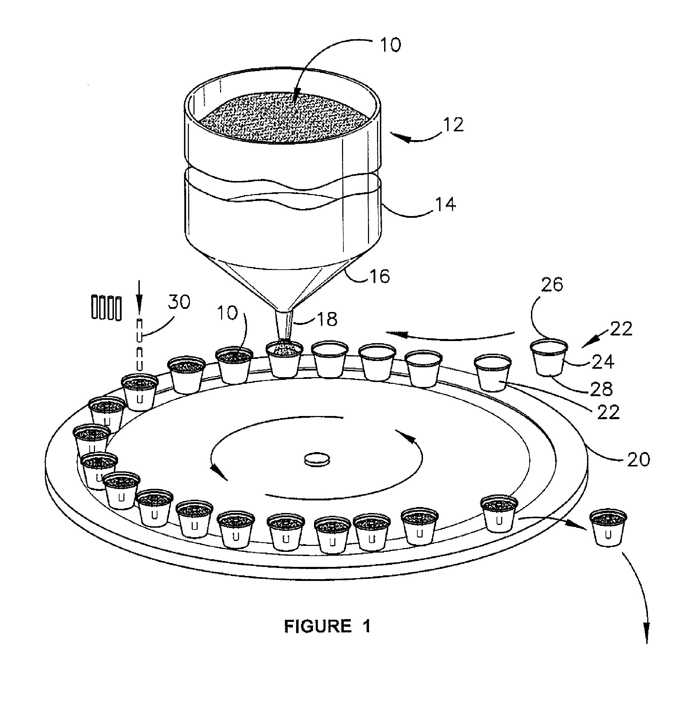

Figure 1 is a schematic perspective view of one form of a filling station for adding a plant growing medium to a planter pot to form a planter pot with plant growing medium.
Figure 2 is a partial perspective partial cross-section view of one form of a pot and former for forming a void internally within the pot.
Figure 3 is a partial perspective partial cross-section of another form of a planter pot and former.
Figure 4 is a fragmentary perspective view of one layer of one form of pots showing placement of a single similar pot upon the layer of lower pots to commence the formation of an upper layer of pots.
Figure 5 is a side elevation view of one form of an array of one form of stacked pots of Figure 4 for forming a generally self supporting stacked structure or array of pots.
Figure 6 is a top plan view of layers of pots in cooperative interlocking engagement with one another in adjacent layers showing the relationship of individual pots within a layer and between layers of pots forming one form of a stacked array.
Figure 7 is a close up view of circle A of Figure 6 showing the interlocking of pots within a layer and between layers.
Figure 8 is a fragmentary perspective view of a lower layer of another form of pots showing the location of a single pot commencing to form an upper layer upon a lower layer of pots.
Figure 9 is a side elevation view of another form of an array of stacked pots in which the pots are in the form as shown in Figure 8 in a generally self supporting array or structure located upon a pallet.
Figure 10 is a top plan view of a single pot of Figure 8 located in place above a lower layer of similar pots to the pot of Figure 8 showing the interrelationship of the pots to form an interlocked array.
Figure 11 is a top perspective view of one form of a closure for fitting to one form of the pot.
Figure 12 is an underneath perspective view of the embodiment of Figure 11.
Figure 13 is a perspective view of a multitude of similar closures in accordance with Figure 11 arranged in a nested configuration for transportation of the closures alone.
Figure 14 is a cross-sectional view of two closures of Figure 11 superposed one above the other showing the configuration of two types of clips.
Figure 15 is a perspective view of two layers of pots and closures forming two layers of pots one upon the other in which the pots of one layer are arranged in interconnected side-by-side relationship.
Figure 16 is an enlarged view of circle B of Figure 15 showing the cooperative engagement of the two types of clips provided on the rims of the closures.
Figure 17 is a top perspective view of one form of a stabilising plate for use in forming one form of transport module for transporting lidded pots containing potting mix showing the first set of retaining elements in the form of circular apertures.
Figure 18 is an underneath perspective view of the plate of Figure 17 showing a second set of retaining elements in the form of protruding discs.
Figure 19 is a top plan view of the plate of Figure 17 showing the circular apertures and cut-outs located along two opposed sides.
Figure 20 is a vertical cross-section along the line 20 to 20 of Figure 19.
Figure 21 is a top side perspective view of one form of the transport module for transporting one form of a stacked array of lidded planter pots containing potting mix.
Figure 22 is a partial cross-section view of a multitude of one form of the stabilising plates when in a nested condition for transport.
Figure 23 is a partial side cross-sectional view of one pot above and one pot below one form of the stabilising plate showing the relationship between the pots and the retaining elements of the stabilising plate.
Figure 24 is a top side perspective view of another form of the transport module.
Figure 25 is a top perspective view of the transport module having a modified top plate.
Figure 26 is a perspective view of the upper surface in use of a further modified top plate.
Figure 27 is a perspective view of the lower surface in use of the further modified top plate.
Figure 28 is a top perspective view of the transport module having the modified top plate of Figures 26 and 27.

### DETAILED DESCRIPTION OF AN EMBODIMENT

Forms of embodiments of aspects of the invention will now be described.

A suitable plant growing media, such as for example, a compost, a potting mix, or other granulated material in which plants can be grown is formed in bulk is prepared, such as for example, by mixing a number of individual components to form a formulated plant growing material at a suitable location. Optionally, the formulated material is allowed to stand for a period of time to mature until the product can be used. One example of the plant growing media is a potting mix in which growing plants may be planted and grown. The potting mix can be formulated by adding ingredients or components depending upon the type of plant to be grown in the potting mix. The present invention will be described with particular reference to a potting mix for ease of description. However, it is to be noted that any suitable plant growing material has application in the present invention, including naturally occurring materials, synthetic materials or mixtures of such materials.

Potting mix 10, after formulating and maturing, is introduced into a receiving hopper 12 acting as a reservoir for a supply of the potting mix. The receiving hopper can take any suitable form or shape and be of any suitable size or type.

In one form, the hopper is a cylindrical vessel having a wall 14, a conical lower end 16, tapering to a filling spout 18 or similar, located at the lowermost part of hopper 12, through which a predetermined amount of potting mix is delivered into a suitable container. Hopper 12 is computer controlled so as to deliver a reproducible measured amount of potting mix to each individual container in sequence as required in accordance with requirements such as the size and shape of the container and the like.

Hopper 12 forms part of the packaging installation. In one form, the packaging installation also includes a filling station in the form of a movable platform, such as for example, a rotating platter, disc 20 or similar upon which pots 22 are collectively conveyed. Typically, disc 20 rotates in a counter-clockwise direction to allow a supply of pots 22 to be rotated past filling spout 18.

A supply of suitable pots 22 to be filled with potting mix is located close to the edge of rotating disc 20 so that empty pots can be located one at a time in sequence at regularly spaced apart intervals on rotating disc 20. Although the pots may be supplied in any order, the packaging installation includes means for locating the pots in the correct orientation and spacing on rotating disc 20 (not shown). In one form, rotating disc 20 is indexed to stop momentarily so that each pot 22 is stationary for a short period of time beneath spout 18 so that a measured amount of potting mix can be introduced into the pot.

In one form, pot 22 is a generally cylindrical pot having a tapered side 24 in which the diameter at or towards the top of the pot is greater than the diameter at or towards the base 28 of the pot to allow easy removal of individual pots from a stack of empty pots and/or for easy removal of the contents of the pot when required by inverting the pot to remove its contents immediately prior to planting the plant supplied within the pot.

After pots 22 have been located on rotating disc 20, they are moved one at a time to take up a position immediately beneath filling spout 18 so as to receive a reproducible measured amount of potting mix therein.

The disc continues to rotate to convey the now filled pots to another work station where a former 30 is located for forming a void or similar in the potting mixture within the pot. The formation of the void can be achieved in any desirable, suitable or convenient manner, including a mechanical device in the form of a reamer, optionally a movable reamer, or a separate former for more or less permanently or temporarily being located in the potting mix.

Former 30 can take any suitable shape, size or form. The purpose of the former is to produce a more or less cylindrical cavity or other shaped cavity within the compost in the pot more or less aligned with the central axis of the pot so as to form a cavity, bore or void into which a seed or seedling may be placed at a later date. Not only is it a requirement that the void be formed, but also that it be maintained. In one form, the former both forms and maintains the void whilst in another form, a first former forms the void and a second former, different to the first former, maintains the void. Typically, the former both forms the void but it also maintains the void during transportation of the pot and compost, preferably until the time the growing item is introduced into the pot for planting in the compost.

In one form, a supply of substantially identical formers are arranged at the former inserting work station, such as for example, the formers are arranged in a linear array of individual tubes or rods aligned so as to be able to be presented one at a time for insertion into respective pots as the pots rotate underneath the workstation by suitable machinery (not shown).

In one form, the former is a hollow cylindrical tube of a length similar to the height of pot 22. In another form, the former is a solid rod or reamer (not shown). It is to be noted that the former can take any suitable form and be of any suitable size, shape or profile.

After former 30 has been inserted into pot 22, the pots are then conveyed on platter 20 to a part of the installation where the pots can be removed from the rotating disc and stacked into a suitable array of pots for further processing, such as for example, stacked into a suitable array of pots for transportation to a suitable location such as for example, to a grower or nursery where seeds or seedlings are to be added to the pots by the grower without the additional need to fill the pots.

In one form, the former is made from a biodegradable material or other decomposable material which can deteriorate or degrade either over time, by contact with the potting mix or with one or more components of the potting mix, or by application of water or nutrient solution to the pot, including combinations thereof.

In one form, the tubular former is made from starch containing material, cellulose, or other water degradable material so that water, added to the pot after planting the seed or seedling, degrades the tubular former so that the material from which the former is made is incorporated into the compost to form part of the compost over time.

In one form, the former may include nutrients, fertilisers, wetting agents or other growth enhancer or growth promoting material.

In one form, the former may be incorporated into the pot, such as for example, by being fixedly located within the pot. In one form, the former extends from the inner surface of the base into the interior of the pot, particularly in alignment with the central axis of the pot (not shown).

In one particularly preferred form, the former may be formed integrally with a lid or cover by extending outwardly from the inner surface or undersurface of the lid so that when the cover is placed on the pot, the former depends downwardly into the pot to displace the potting mix to form a correspondingly shaped void or cavity, particularly if the lid is located on the pot in a twisting motion as well as in a downwards motion. The lid can remain in place until the pot is to be planted with a plant growing item. This not only prevents spillage of compost or potting mix from the pot, but strengthens the pot to make it stronger and more resistant to buckling or collapsing, allowing multitudes of pots to be stacked one upon the other which is particularly desirable during transportation of the pots, such as for example, using a transport module of the type that will be described later in this specification.

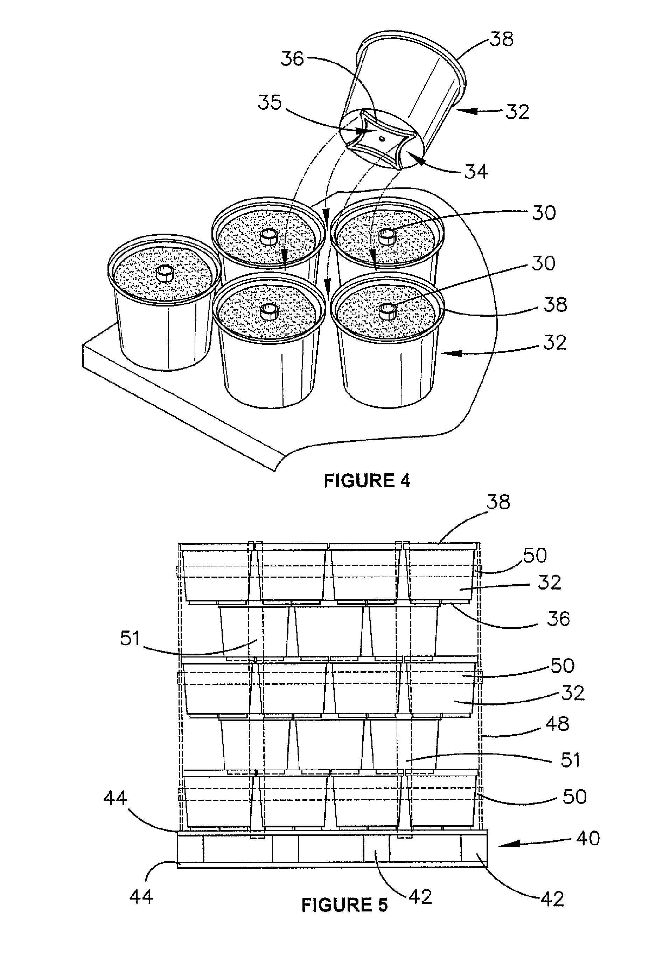

One form of pot 32 will now be described with reference to Figures 4 to 7.

Pot 32 is in the form of a tapered cylindrical open ended container having a base 34, a tapering side wall 36, and a continuous rim 38 provided around the open end. Base 34 of pot 32 is provided with a formation of projections 35 and depressions or troughs generally on the outer surface of base 34. In one form, the projections are in the form of curved shaped ridges 36 formed into a four sided curved shape of four generally arcuate ridge elements 36 joined together at their respective corners forming the curve sided diamond shape with outwardly directed junctions.

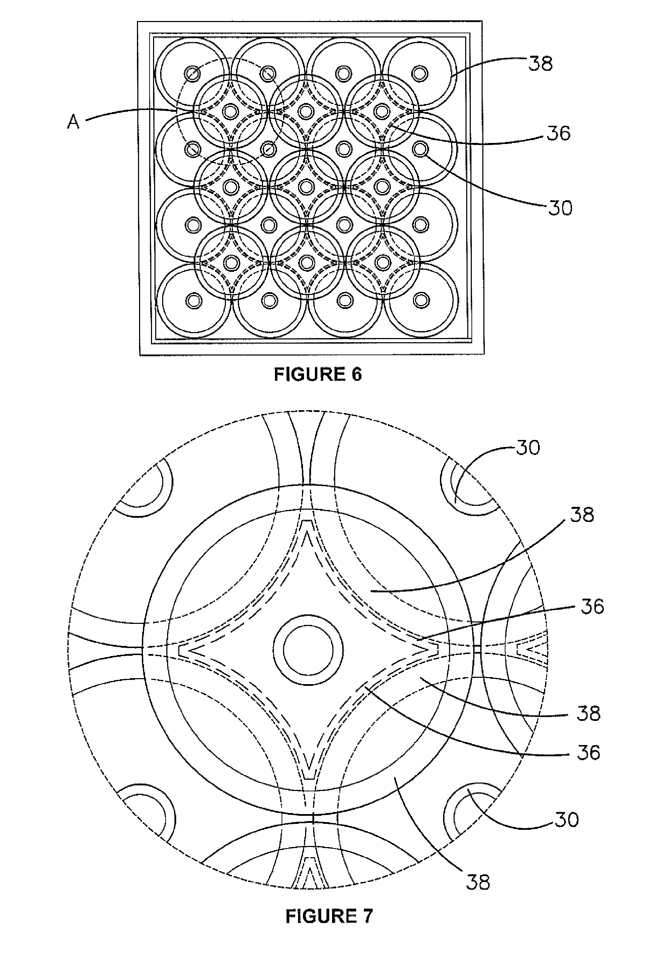

It is to be noted that each of the ridge elements is the same length and of the same curvature and located symmetrically about the centre point of base 34 to form the continuous diamond shape. Additionally, the length and curvature of each segment 36 of the ridge corresponds to the curvature of the rim 38 of the pot at the open end of the pot so that when four pots are located at the one level in close packed configuration to each other with respective edges of the individual rims abutting one another to form a generally curved four sided void as shown in Figures 6 and 7, so that when another identical pot is placed on the collective tops of the four lower close packed pots, the ridge segments 36 of the upper pot engage with the segments of the rims 38 of the lower pots so as to positively engage therewith, preferably to interlockingly engage therewith to connect the upper pot to the four lower pots to form a stable stacked array for transporting the filled pots with a reduced risk of the pots toppling or falling over when there is a more or less vertical column of pots, including when a plurality of pots form both the upper layer and the lower layer and additional upper layers are placed upon the already formed layers.

It is to be noted that the position of the individual pots of the upper layer of pots are staggered with respect to the position of the individual pots of the lower layer of pots so that the central axis of the upper pot is aligned with the centre of the void formed by the four close packed lower pots. This staggered pattern is repeated over the entire number of pots of each layer. Additionally, the pots in alternate layers of pots are located in aligned relationship with one another.

One form of the stacked arrangement of pots 32 is shown in Figure 5 where five layers of pots are located one above the other in stacked interlocked relationship with each other upon pallet 40 consisting of stringers 42 and slats 44 arranged generally perpendicularly to one another.

A suitable covering in the form of a wrapping 48 of transparent plastic material, such as polyethylene, polypropylene, or other flexible plastic sheeting material can be wound around the stacked array to form a self supporting pallet of pots containing potting mix with the formers in position maintaining the void in the potting mix during transportation.

An optional strengthening brace in the form of a belt 50 can be included around the layers of pots 32. In one form, belt 50 is located around selected layers of pots 32, whereas in other embodiments, each layer of pots 32 is provided with its own dedicated belt 50.

In one form, belt 50 may form a network of interconnecting belts in the form of vertical straps 51 interconnecting the horizontal belts 50 to provide increased support for the array of pots to further facilitate the pots being stacked in vertical columns.

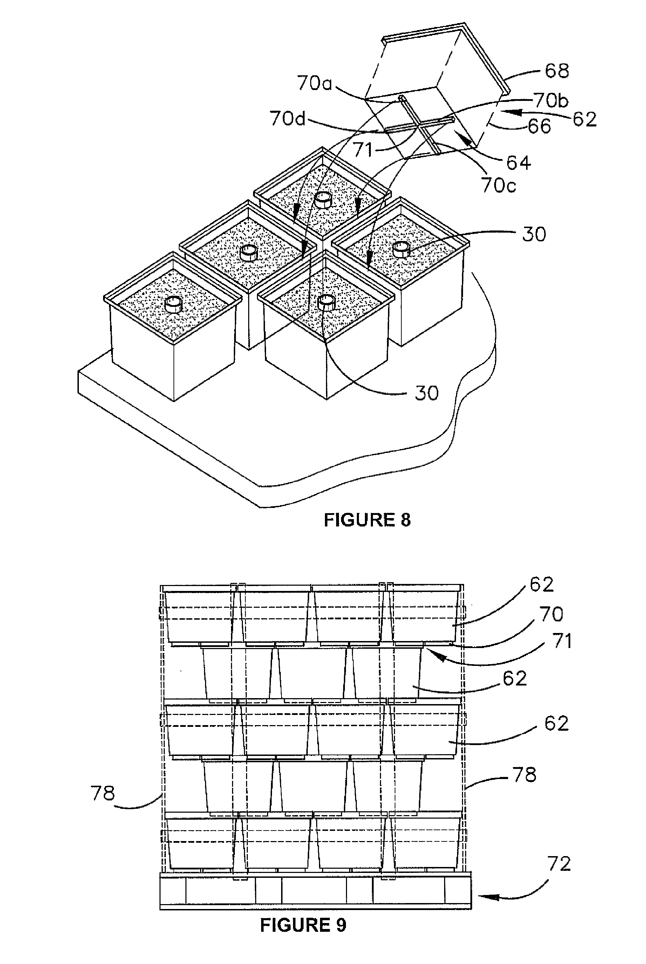

Another form of the compost containing pots having a former are shown in Figures 8 to 10 which pots are in the form of a generally square or rectangular cross-section pot having a generally cubed or parallelepiped shape capable of being located in interlocked stacked relationship to one another, which array is generally self supporting.

This form of the pot 62 has base 64, tapering side walls 66 and a rim 68 around the open end of the pot.

Base 64 is provided with a combination of projections 65 and depressions. A projecting formation in the form of a cruciform is formed in the base of the pot from four projections or ridge elements extending outwardly from a common point at the centre of the base. The cruciform has four arms 70a, b, c, d extending substantially perpendicularly from each other from a central common point 71.

When the individual cubed shaped pots 62 are removed from rotating disc 20 and placed in a single layer on pallet 72 in close packed relationship to each other with respective sides of rim 68 of each pot 62 are located in spaced apart abutting relationship to one another to form a centrally located void in the form of a cruciform of generally complementary shape to the cruciform or ridge formation by the four ridge elements 70a, b, c, d formed on the base of the pot. In one form, rim 68 of each pot is provided with a spacer arrangement (not shown) slightly below the position of rim 68 to assist in maintaining the correct spacing of the rim to enable the cruciform ridge arrangement arms 70a, b, c, d to be received therein to assist the stability of the stack of pots. A second layer of identical pots is located upon the lower layer of pots with the cruciform ridge of arms 70a, b, c, d received in the complementary shaped void to interlockingly connect the upper layer of pots to the lower layer of pots to form a generally self supporting interlocked array of pots of different layers or levels. The form of the interlocking can be in accordance with requirements to form a stable stack of pots. Any number of layers within reason can be located one upon the other to form an interlocked stacked array.

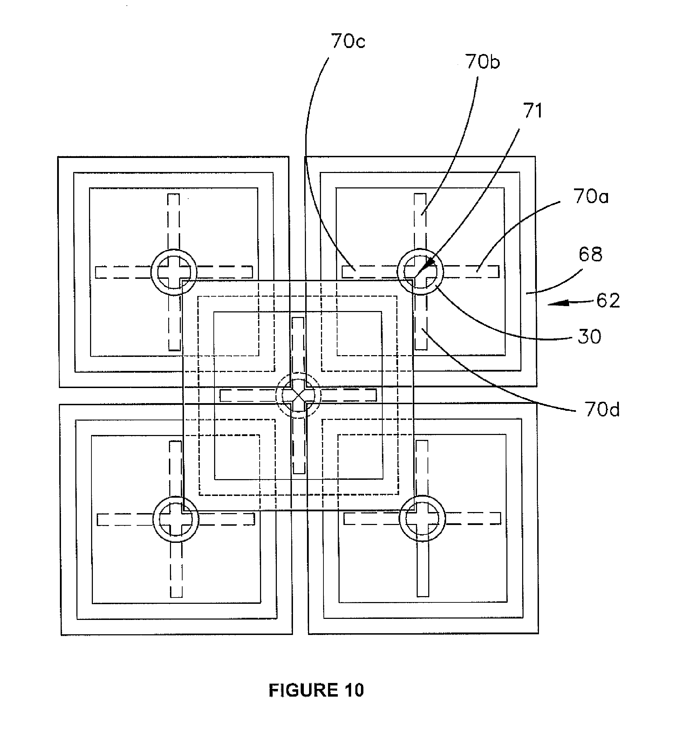

It is to be noted that the central axis of the pot of the upper layer is aligned with the centre of the void of the lower layer of pots so that the pots are in staggered relationship to one another in layers as shown more particularly in Figure 10, i.e. with respective centres of the pots in two adjacent layers being offset or not aligned with each other. This staggered relationship between the pots is repeated alternately with each added layer so that the first, third, fifth layers and so on, (i.e. the odd numbered layers) are in corresponding alignment with each other with a single central axis extending through the central axis of each pot and the second, fourth, sixth and so on layers (i.e. the even numbered layers), are in alignment with each other having a common central axis. The first, third and fifth layers are staggered with respect to the second, fourth and sixth layers as illustrated in the drawings. The cooperative engagement of the ridges located on the basis of the pots in the upper layer with the voids formed by the rims and the rims of the lower layer of pots facilitates the stacked array being stable and being resistant to toppling over or collapsing, particularly during transit.

In one form, a suitable covering is applied to the pallet. However, in other forms, the covering is optional and is not present. If present, the suitable covering in the form of a transparent plastic sheet material 78 is wrapped around the entire perimeter of the stacked array of pots to not only protect the pots and contents but also to make transportation easier with reduced chance of the array collapsing or falling over or apart.

When the stacked array of pots in whatever form are delivered to a customer or other, such as for example, a plant grower, nursery or similar, the pallet can be unwrapped and individual pots removed from the pallet with the former located inside each respective pot remaining in place within the pot. The presence of former 30 in the individual pots retains the void or cavity in the potting mix throughout the transportation of the pots. The interlocking of the pots allows the stack of pots upon the pallet to be handled as a single unit and to be substantially self supporting as well as allowing two or three pallets to be stacked one upon the other to further reduce transportation and handling costs.

When a pallet of pots is delivered to the nursery, the optional plastic wrapping, if present, is removed from the pallet exposing the pots. The pots can then be removed one at a time or in groups from the pallet for use in a planting operation in a planting shed or similar, which planting operation may be mechanised.

Former 30 can be removed immediately prior to inserting a seed, seedling, plant or other into the cavity or the seed, seedling, plant or other can be located internally within the hollow former and a suitable growing medium such as for example, compost, nutrient, nutrient solution or the like added internally within the former. If the former is made from a degradable material which degrades, such as for example, upon contact with water or nutrient solution, the former can quickly dissolve around the seedling when water is added.

In one form, nutrients, fertiliser, wetting agents or similar growth enhancement materials can be incorporated into the degradable open tube to assist in promoting healthy growth of the plant when placed in the pot.

Once the plant is added to the pot, the pot is available for sale and/or distribution to a purchaser for planting into a garden or being retained in the pot whilst growing.

Other forms of the former include having a container such as a pot with an integral former in the form of a plug, mandrel or similar extending axially upwards from the base of the pot internally within the pot so that when potting mix is added to the pot, the potting mix forms around the former to define a well, cavity or similar when the former is removed, such as for example, by breaking the former.

In this form of the pot, the internal former can be detached from the pot such as for example, by the former having frangible connectors, such as for example, frangible ribs, bands or the like connecting the former to the base so that the frangible connectors can be severed prior to planting the plant thereby retaining the void or cavity sufficiently long enough to enable the plant to be added.

Other forms and arrangements of the former and of producing the cavity are possible.

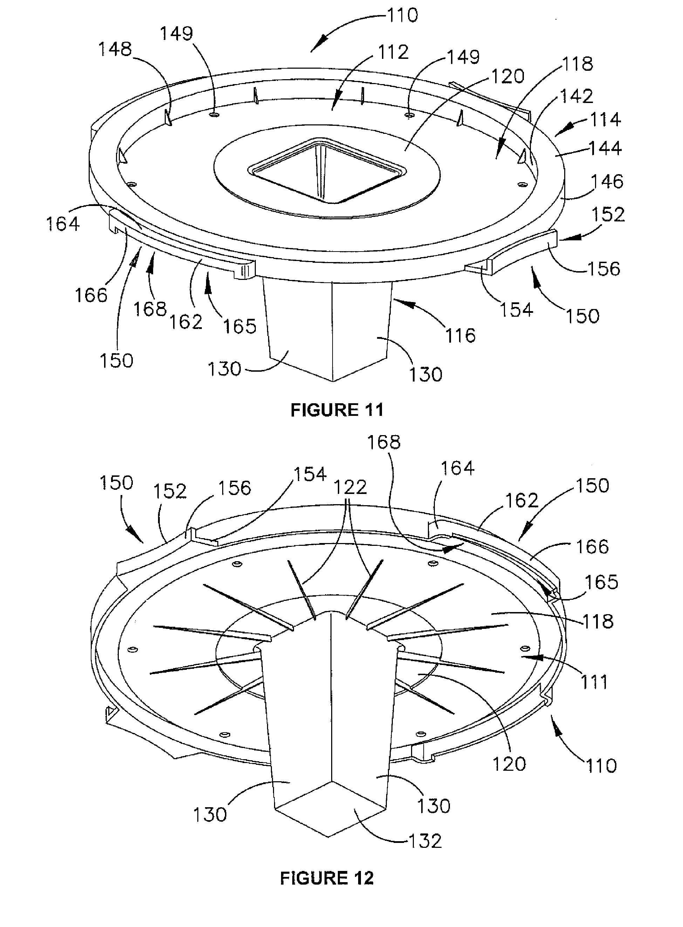

Returning to the container, one embodiment of the closure for the container will now be described with reference to Figures 11 and 12 of the drawings. The base of the container of this embodiment is a pot, such as for example, a planter pot for containing potting mix or compost of the type used to grow seeds, seedlings, plugs, tubes or similar in a suitable soil mixture. The pot in one form, is a conventional planter pot having an enlarged rim portion, a substantially cylindrical body having a tapering side and drain holes or vents located around the bare or lower surface of the pot. It is to be noted that any form of pot can be used in the system of the present invention.

The container system of the present invention includes a component which can be referred to generally as a cover or closure for the pot. However, the cover or closure not only closes or seals the top of the pot to prevent spillage of the pot but, in one form, also has one form of the former so that cover or closure is responsible for forming and maintaining the cavity into which the seedling is to be planted at a later date. The void or cavity is formed when the closure is applied to the open top of the pot by the former extending downwardly into the potting mixture to form the void.

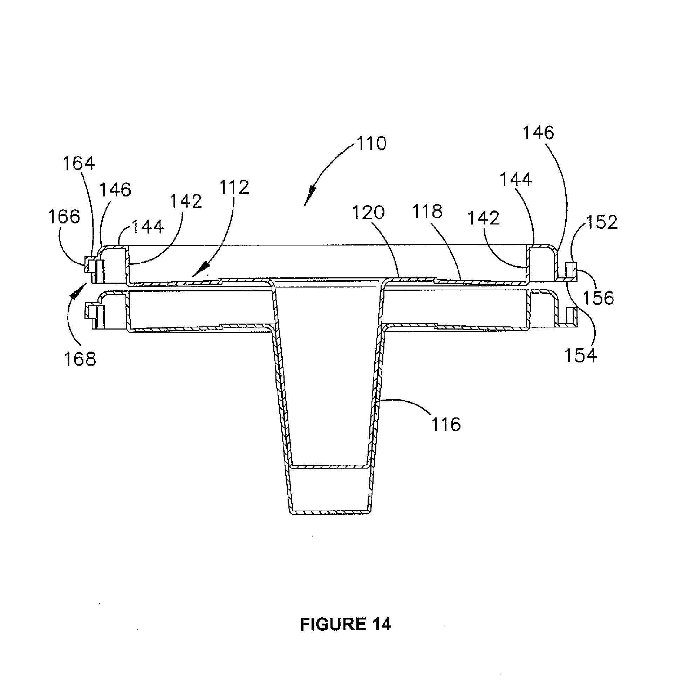

Forms of the closure of the pot, in the form of lids will now be described with particular reference to Figures 11 to 16 of the accompanying drawings. One form of the lid is generally denoted as 110 and has three main parts or portions which are cover portion 112, rim 114 and former portion 116 in which cover portion 112 is located intermediate former portion 116, which is located at or towards the centre of the cover portion, and rim portion 114 which is located circumferentially around the outer circumferential edge of lid 110. Lid 110 is substantially disc-like being formed as a dished circular plate in which the main cover portion 112 is at a lower level when compared to the rim portion and the former portion 116 extends from the undersurface 111 of lid 110.

Cover portion 112 is substantially disc-shaped being in the form of a generally annular shaped circular plate extending from rim portion 114 to former 116. Cover 112 is formed as two parts which are a radially outer part 118 and a radially inner panel 120. Radially inner panel 120 is a circular strengthening panel provided at or towards the centre of cover 112 surrounding former 116 to strengthen lid 110. In one form, panel 120 is of increased thickness as compared to the thickness of the outer part 118. In one form, the thickness of outer part 118 and inner panel 120 is substantially the same but is in stepped relationship with respect to outer cover portion 118 in that outer cover 118 and inner panel 120 have the same thickness but the respective planes of both the inner panel and outer part are slightly displaced with respect to each other in which inner panel 120 is located slightly above the outer portion 118.

The undersurface of lid 110 is additionally provided with a multitude of radially extending ribs 122, each rib extending from one wall of former 116 towards the rim portion 114 in the form of spokes of a wheel. Ribs 122 provide strength for lid 110 so that the outer part 118 is slightly depressed when compared to the inner panel in stepped relationship.

Turning now to former 116. In one form, former 116 extends from the undersurface 111 of lid 110 in a downwardly depending axial direction at the centre of lid 110 to form a lengthwise extending projection for forming a space, void or cavity in the compost located in the pot to which lid 110 is to be secured when lid 110 is fitted to the top of the pot by former 116 displacing the potting mix in the vicinity of where the former is being placed so as to form the void.

Former 116 has four lengthwise extending tapering walls 130 arranged at about 90° to one another and a flat base 132 forming a closed ram, reamer, plug or similar. When lid 110 is fitted to the top of the pot, the ram or plug 116 having the four walls 130 and base 132 of former 116 extends into the compost in the pot, the distal end of the former contacts the potting mix to displace the potting mix away from the former to enable the void to be formed. The void corresponds in shape and size to the external shape and size of former 116 and the size and shape is in accordance with the size and shape of the plant, plug, seedling or the like, so as to enable the plant or seedling to be planted in the void at a later date or in a later stage. It is to be noted that other shapes and sizes of the former are possible.

In one form, rim portion 114 is in the form of a stepped flange profile arrangement comprising three main components which are inner upstanding wall 142, shelf 144, and outer downwardly depending wall 146. Inner upstanding wall 142 is connected along a lower edge to the outer circumference of cover 112 and is connected to radially inner edge of shelf 144 along an upper edge. Shelf 144 extends between the upper edge of inner wall 142 and the upper edge of outer wall 146. Downwardly directed outer wall 146 is connected to the outer edge of shelf 144 along an upper edge and terminates along its lower edge to form rim portion 114 having a substantially U-shaped or inverted U-shaped profile or cross-section in the normal in-use position. Rim portion 114 is for fitting over the top edge or rim of the pot containing compost or potting mix. A multiplicity of substantially triangular shaped reinforcing gussets in the form of triangular projections 148 or similar are provided at regularly spaced apart locations around the internal circumference of where rim 114 joins to cover 112 to reinforce or strengthen lid 110. In one form, a plurality of vents in the form of circular apertures 149 are provided at regularly spaced apart locations around the inner circumference of rim 114.

It is to be noted that the vents can have any suitable shape or form.

In one form, vent 149 is located intermediate each alternate pair of gussets 148. However, any suitable spacing is possible.

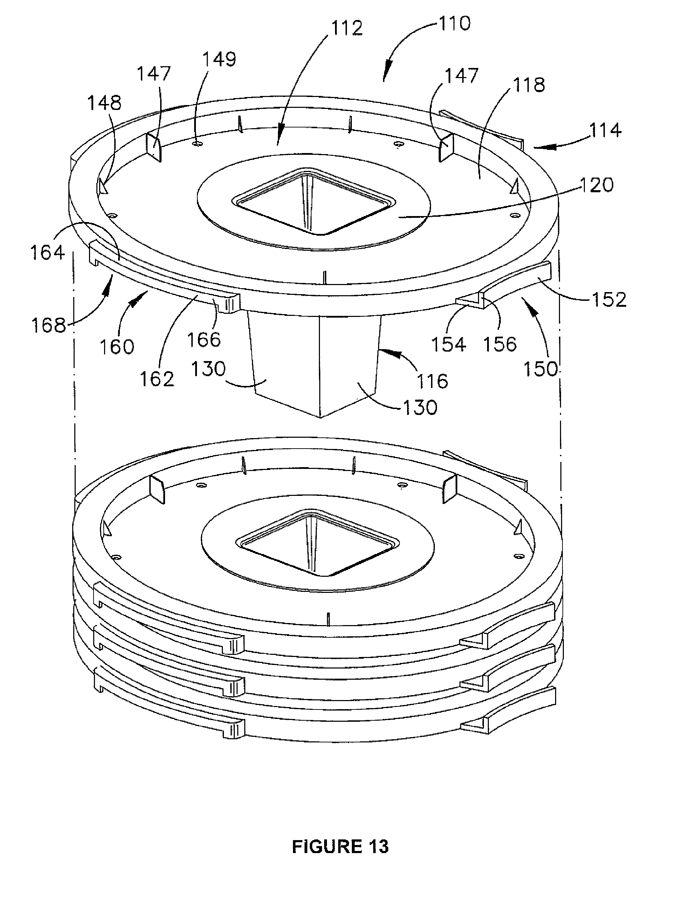

As illustrated in Figure 13, one form of lid 110 is provided with a multitude of spacers 147 located at regularly spaced apart locations around the internal circumference of where rim 114 joins cover 112 adjacent gussets 148 and vents 149. Three such spacers 147 are illustrated in Figure 13. However, any number of spacers 147 can be present, typically 4, 5, or 6 such spacers are arranged in regularly spaced apart relationship to each other. Spacers 147 are for guiding the base of the upper pot received in the cover 112 of lid 110 of the lower pot so as to locate the base of the upper pot centrally within cover 112 of the lower pot and to prevent sideways and/or radial movement of the upper pot with respect to a lower lid during transportation of the pots when containing potting mixes as will be described in more detail later in this specification.

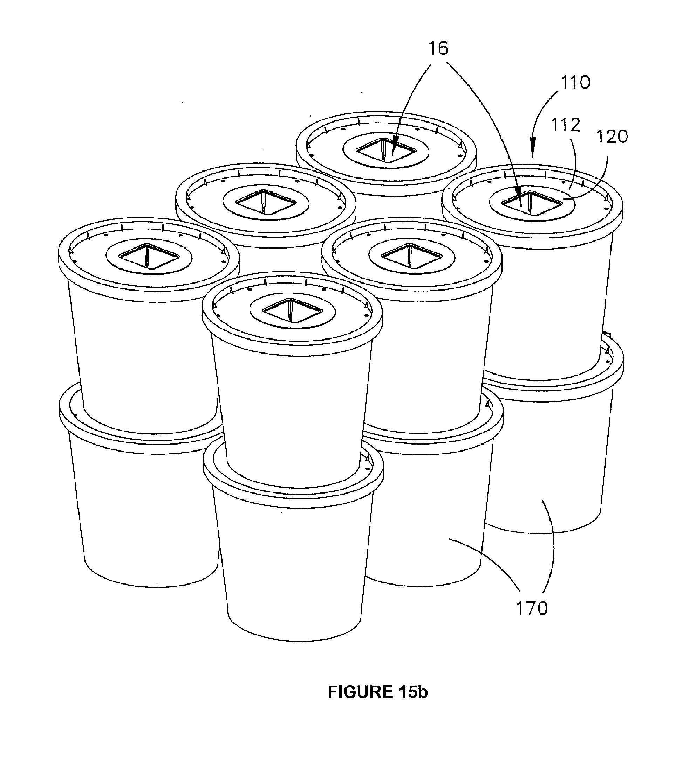

As illustrated in Figures 11 to 15a and 16, one form of lid 110, is provided with a number of fasteners in the form of clips, generally denoted as 150, provided at regularly spaced apart locations around rim 114 to extend generally radially outwards from the outer wall 146 of rim 114. Other forms of the lid do not have the fasteners but rather rely on the rims of the lids on adjacent pots cooperating with each other such as for example, the lid showing in Figure 15b.

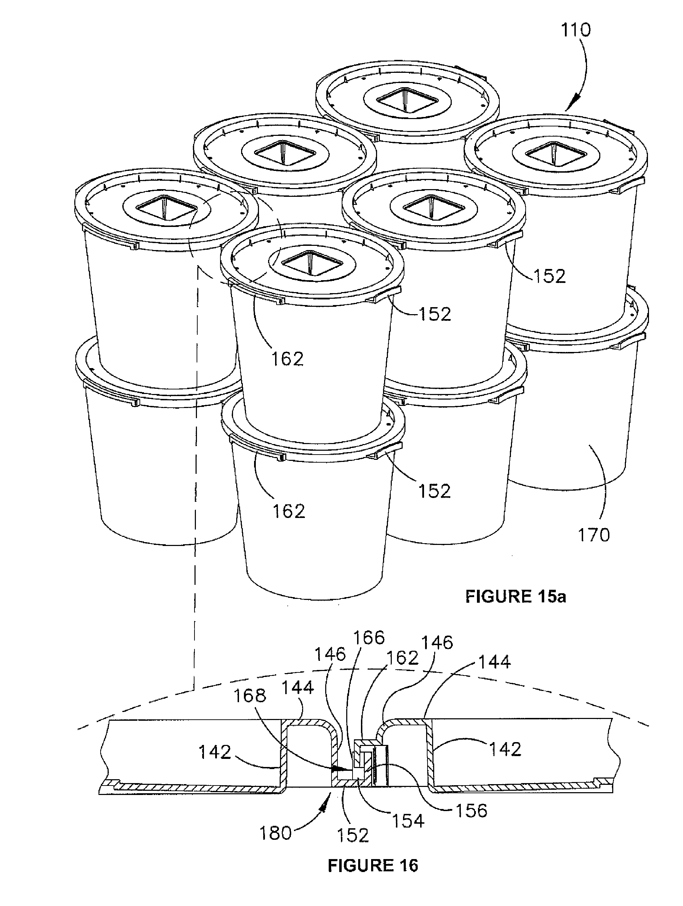

In one preferred form of the lid having the fasteners shown in Figure 15a, there are four clips 150 arranged generally at about 90° to one another around the outer circumference of lid 110 to extend from the lower edge of outer wall 146. Clips 150 can take one or other of two different forms. The two different forms are complementary to one another and are designed to be releasably engageable with one another so as to interlock together. One of the two different forms of clips 150 is clip 152 which is in the shape or profile of a generally reverse L-section. The reverse L-section is a flange having a radially outwardly extending web 154 arranged to extend substantially in the same plane as cover 112 so as to be regarded as being substantially horizontal and a wall 156 arranged to extend substantially perpendicular to web 154. Wall 156 is substantially curved in the opposite direction to the curve of outer wall 146 and is spaced apart from wall 146 by web 152. Wall 156 extends perpendicularly upwards in the form of an open tray like structure having a floor in the form of web 154 and upstanding wall 156. Wall 156 is curved and the radius of curvature or amount of curvature of wall 156 is about the same as the radius of curvature or amount of curvature of wall 146. However, wall 156 curves in the opposite direction to the direction of curvature of wall 146, so that whereas wall 146 is convexly curved, wall 156 is concavely curved.

The other form of clip 150 which is the second type of clip 162, is complementary in shape, size and profile to clip 152. Clip 162 is in the form of a cap, roof, ceiling or similar rather than a tray, and is formed by web 164 forming the roof of the cap and downwardly extending wall 166 extending axially downwardly from the radially outwards edge of web 164 to form a partially enclosed gap, space or void 165.

In one form, wall 166 is provided with a generally rectangular cut-out or rebate 168, along the lower edge of wall 166. Wall 166 is curved and the curvature of wall 166 corresponds to the curvature of wall 146 and thus curves in the same direction to the curvature of wall 146 and hence the circumferential edge of lid 110. Clip 160 forms an open roof or cap like structure having a ceiling corresponding to web 164 and downwardly depending wall 166.

In both forms of clip 150, the wall of the clip is spaced apart from the outer wall of rim 114 by the width of the respective web. Clip 150 can take other suitable shapes, profiles, sizes or arrangements.

In one embodiment (not illustrated), the two different forms of clip 150, 160 are alternately arranged around rim 114 so that the two 'tray' forms of clips 152 are diametrically opposite one another and the two cap-like structures of clips 162 having ceilings are arranged diametrically opposite each other. However, other arrangements of the clips are possible such as having both of the forms of clip 152 located in side-by-side relationship to each other and both of the other forms of clip 162 located in side-by-side relationship to one another as shown more particularly in Figures 11 to 16. In one form, both clips 152 are located in the same semicircular part of lid 110, and both clips 162 are located in the other semicircular part of lid 110 as illustrated in Figures 11 to 16.

Clips 150 can have any suitable or convenient form. The purpose or function of clips 150 is that when lid 110 is fitted to a pot, clips 150 can cooperatively engage with complementary clips of the lid of contiguous containers to join two or more adjacent planter pots together in a stacked array for ease of transportation as will be described in more details below. In one form, the upstanding wall 156 of tray-like clip 152 is received within the space or void 165 of cap-like clip 160 such that wall 156 and web 154 are located in rebate 168.

Operation of this form of the planter pot and lid combination will now be described with particular reference to Figures 15 and 16.

After compost has been added to the interior of a suitable planter pot, such as for example, a cylindrical planter pot with tapering sides, lid 110 is fitted to the top of the pot such that former 116 extends into the mass of compost in planter pot to form a void in the shape of former 116, typically a flat four sided elongate hole having tapering sides for receiving a planting plug of a seedling or similar. The rim 114 of lid 110 cooperatively engages with the rim of the top of the pot to securely fasten the lid to the pot such as for example, by the upper edge of the pot being received in the gap formed by inner wall 122, shelf 124 and outer wall 126 of rim 114. In this configuration, clips 150 extend outwardly from the periphery of lid 110.

A collection of individual combined lids and pots 170 are then placed in side-by-side relationship on a suitable carrier for transportation, such as for example, a pallet. The pots are arranged to form a first layer of pots on the surface of the pallet. Adjacent pots cooperatively engage by clip 152 being received within clip 162 such that wall 156 of clip 152 is received through rebate 168 to be received within cavity defined internally within clip 162 as shown more particularly in Figure 16.

It is to be noted that adjacent pots are oriented such that clip 152 of one pot is aligned with clip 162 of a second pot to cooperatively engage as complementary fasteners to securely join the two pots together. A third pot is oriented so that clip 162 of the third pot is aligned with the second clip 152 of the first pot to join the first and third pots together by wall 156 of clip 152 being received through rebate 168 into the void of clip 162. A fourth pot is located adjacent both the second and third pots such that one of clips 152 of the fourth pot is aligned with one of clips 162 of the third pot and one of clips 162 of the fourth pot is aligned with one of clips 152 of the second pot to securely engage with each other to secure all of the fourth, second and third pots to one another into an interconnected array of pots.

Simultaneously, one of clips 152 of the fourth pot engages with clip 162 of the third pot to secure the fourth pot to the third pot so that all four pots are secured to one another to form an interconnected group of four pots. Additional pots are connected to the first group of pots by pairs of clips 152 and 162 from different adjacent pots being secured to each other to form an array of interconnected pots on the one level.

A second layer of interconnected pots is formed on the first layer of interconnected pots in which the base of the upper level of pots rests upon the lids of the lower level of pots as shown more particularly in Figure 15.

In embodiments of lids 110 having spacers 147, the base of each of the pots in the upper layer of pots is centralised on the lids of each of the pots of the lower layer of pots by the radially inboard edges of spacers 147 contacting the outer wall of the pots at or towards the respective bases of each pot to guide the upper pots. Spacers 147 maintain the pots in spaced relationship to each other as the stacked pots are being transported by preventing lateral movement of individual pots with respect to adjacent pots within the same layer of pots and also in the layers immediately above and below the layer of pots.

A third and subsequent layers of interconnected pots (not shown) are formed on the existing layers to form an array of interconnected pots many layers high in which the lids of one layer are all interconnected so that a self supporting stacked array of pots and lids is formed in which the pots are maintained in place by the lids being interconnected to each other. This self supporting stack of pots can be readily transported since the stack resists movement of individual pots because the pots are firmly held in place by the lids which are in a turn securely connected to adjacent lids.

In one form of the closures, the lids do not have any form of fasteners located around the rim but rather the rim of the lids are more or less continuous so that when the pots of the one layer of pots are arranged next to one another, parts of the lids rim of the adjacent pots cooperate with each other by bearing against or abutting against each other to maintain the pots in position within the one layer of pots. In this embodiment, the engaging elements are the rims themselves.

Embodiments useful in transporting pots will now be described.

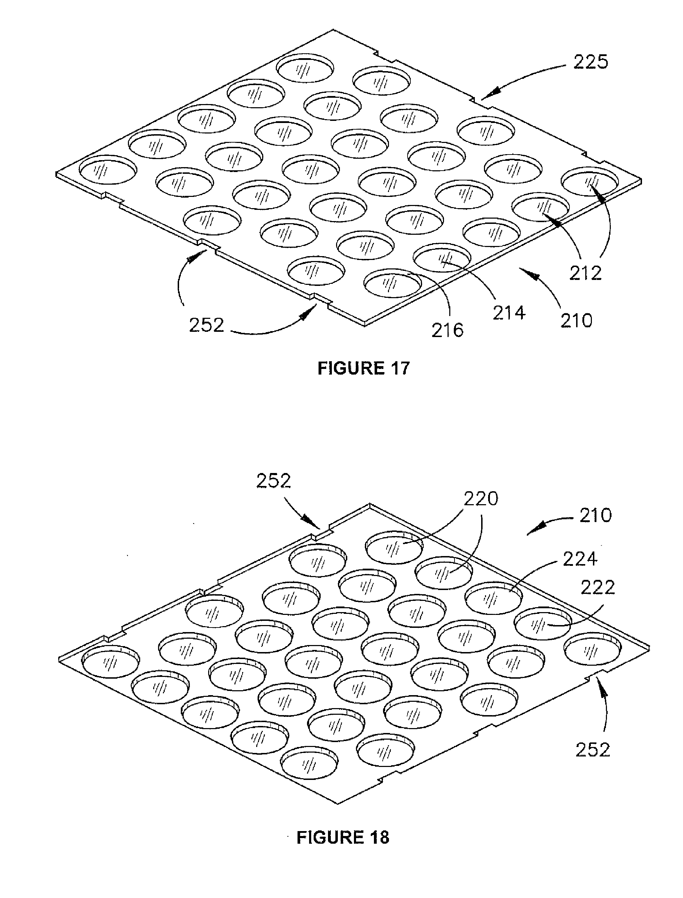

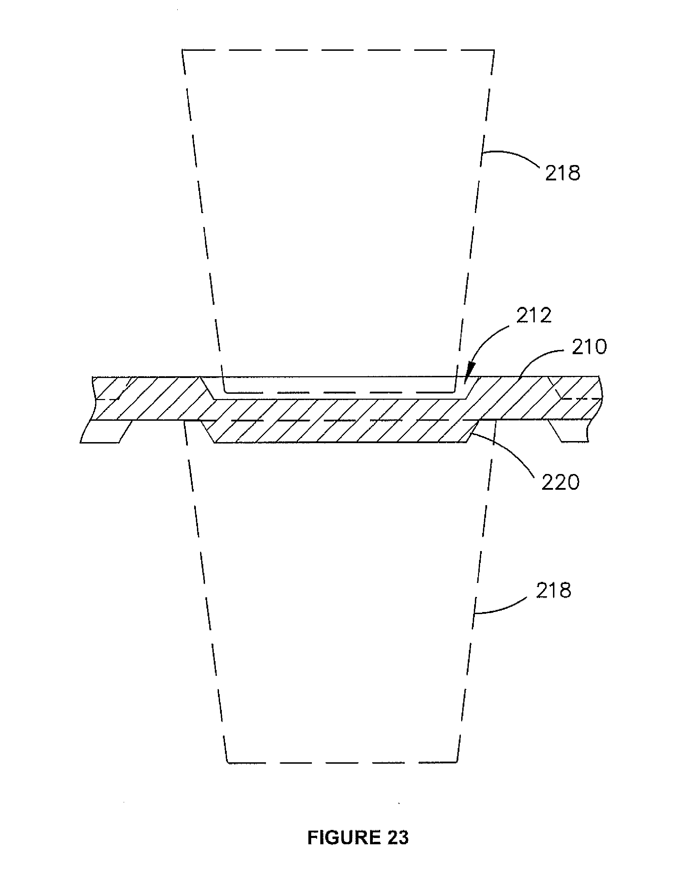

Embodiments of the transportation system useful for transporting planter pots containing potting mix will now be described with reference to Figures 17 to 24 which shows the components of transport modules and the assembled transport modules.

In one form, the transportation system involves the use of a transport module having a multitude of plates as illustrated in isolation in Figures 17 to 20. One form of plate 210 is essentially rectilinear, being either square or rectangular having suitable dimensions. In one form, the size of plate 210 corresponds to the size of a pallet 232, such as for example approximating the dimensions of a regularly sized pallet so that the dimensions of plate 210 are either slightly less than or about the same size as the length of the sides of a conventional transportation pallet, such as for example, a standard size wooden pallet. In one form, the face, generally the upper face in use or the obverse face, of plate 210 is provided with a multitude of circular apertures in the form of a multitude of shallow wells 212. Each well 212 has a well base 214 and well side 216. The diameter of well base 212 is slightly larger than the diameter of a circular planter pot 218, particularly the base of the planter pot, to allow the base of the planter pot to be received in the well to retain the planter pot in the well to prevent excessive lateral movement of the base of the planter pot when located within the well as will be described in more detail later in this specification. Spacers 147 are optionally provided in the lids of the planter pots to assist in retaining the pots in aligned stacked relationship when in the transport module by preventing excessive lateral movement of the pots with respect to each other and to plate 210.

In one form, well 212 is formed by cutting a circular depression in the material from which plate 210 is manufactured. Alternatively, the depression or well can be formed in any suitable manner. Plate 210 can be made from any suitable material, including wood, timber, plastics material, composite board, marine plywood, metal pressed aluminium, steel or other suitable material including combinations of two or more materials. The plate can be moulded, pressed, stamped, fabricated, assembled, cast, machines, routed or the like.

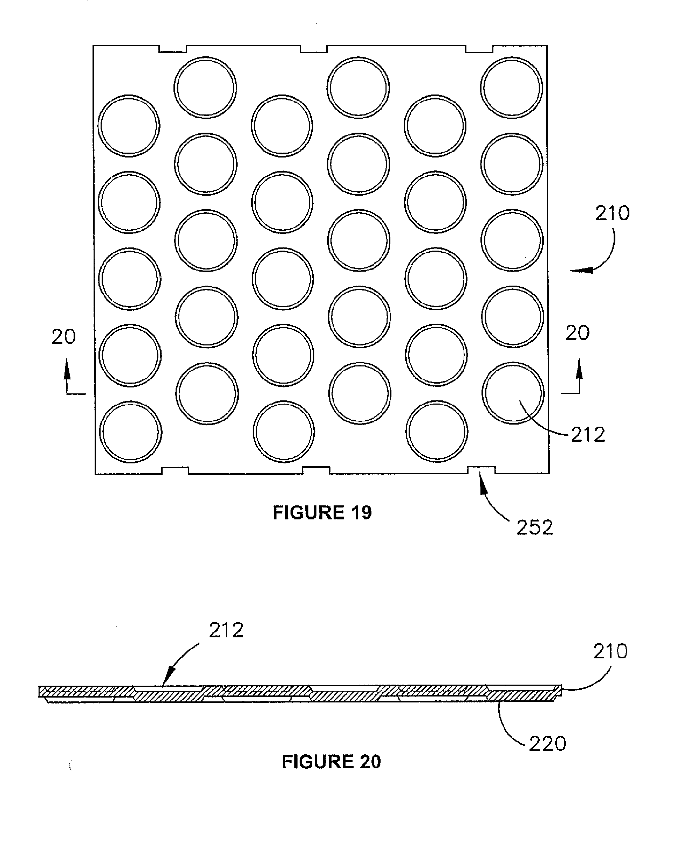

The reverse face, or lower face in use of plate 210 is provided with a multitude of regularly spaced apart generally circular bosses 220 extending outwardly from the surface of plate 210. The position of each boss 220 is aligned with the position of respective wells 212 on the obverse face of plate 210. Each circular boss 220 is provided with a circular base surface 222 and a downwardly depending side wall 224. In one form, boss 220 is in the form of a disc of slightly larger diameter than the diameter of well 212. In one form, the disc is adhered to the undersurface or reverse face of plate 210 to cover the circular hole forming well 212. In other forms, the boss 220 is moulded in plate 210. The diameter of boss 220 is such so as to allow boss 220 to be received in the depression of a lid fitted to the planter pot so as to retain the lid and planter pot in position when in stacked relationship as will be described later in this specification. Thus, plate 210 when viewed in side elevation or vertical cross-section as shown more particularly in Figure 20, is provided with four levels, namely, the level formed by the upper face of plate 210, the level formed by the base 214 of well 212, the level formed by the lower face of plate 210, and the level formed by the bottom surface 222 of boss 220, as shown in Figure 20. It is to be noted that plate 210 can be formed in any suitable manner such as for example, by moulding, including injection moulding, flop moulding or the like, or in one or more fabricating steps, such as pressing, stamping, drilling, routing, machinery or other similar work operations

In one form of plate 210, the position of pairs of wells 212 and bosses 220 are arranged in staggered spaced apart relationship in which adjacent pairs of wells and bosses are offset from each other so that there are five pairs of circular wells 212, and circular bosses 220, located in one direction, such as for example, along the longitudinal direction of plate 210, and six pairs of wells and bosses located in a perpendicular direction, such as for example, in the transverse direction to form a 5 x 6 matrix or array so as to accommodate thirty planter pots 218 at each level in stacked relationship between a pair of plates 210. However, it is to be noted that any suitable arrangement or pattern of wells and bosses can be used, depending upon requirements, such as for example to accommodate different sized pots, including the size of the pots being 150mm (6 inch) pots, 200mm (8 inch) pots or 100mm (4 inch) pots. in which case the total number of pots per layer will be different such as for example, a 6x7 matrix for 150mm (6 inch) pots.

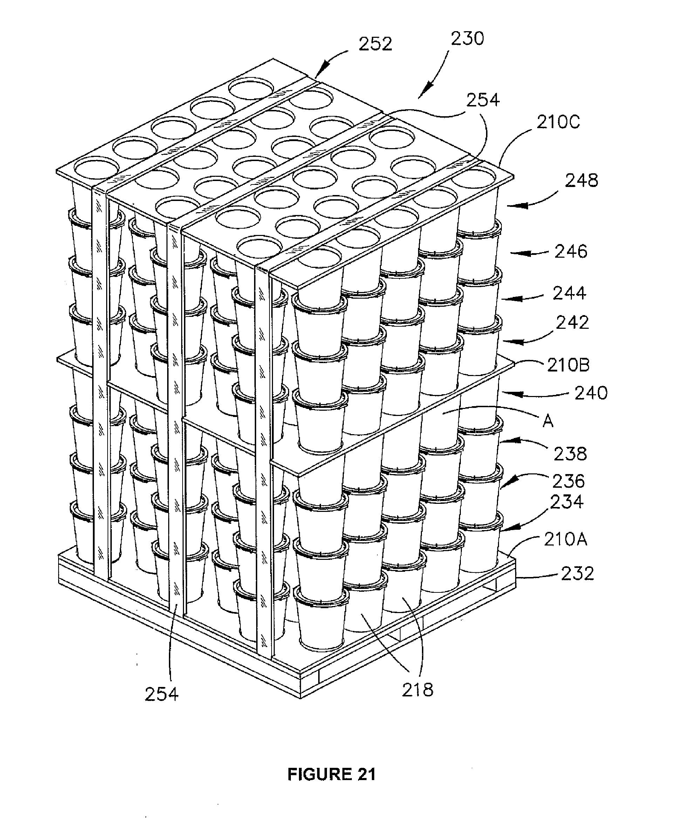

With particular reference to Figure 21, one form of a transportation module, generally denoted as 230, will now be described for transporting a stacked array of lidded planter pots containing potting mix. In module 230, a conventional pallet 232 forms the support or base of module 230. Pallet 232 is typically a wooden pallet of standard or conventional size. However, pallet 232 may be formed from any suitable material and have any suitable configuration, including moulded plastic pallets, pallets made from recycled material or the like, including metal, timber, marine ply, plastics or the like including combinations of such materials. It is to be noted that in one embodiment, the plate, particularly the lower plate in use can be integrated with the pallet so as for example to form the upper surface in use of the pallet so that the plate and pallet are integrally formed as a single unit. Alternatively, the plate and pallet are separate from each other.

In one embodiment, a first stack of pots is formed in which a first plate 210, referred to as a lower plate 210A, is located on the top surface in use of pallet 232 with the multitude of wells 212 facing upwards. A first layer of planter pots 234 to which respective lids are attached, are located on the upper surface of plate 210A, such that the respective bases of pots 218 are received in respective wells 212 to form the first layer 234 of thirty spaced apart lidded planter pots received in wells 212 collectively.

A multitude of another thirty lidded pots or any other suitable number of pots per layer, such as for example 42 lidded pots when the pots are 6 inch pots, is located upon the first layer 234 of pots to form a second layer of pots 236 arranged such that the base of the pots forming the second layer 236 is received in the respective depressions of the lids of the first layer of pots 234. Spacers 147 of the lids of the lower or first layer of lidded pots assist in centring the bases of the lids of the upper or second layer of pots by engaging against the side walls of the upper layer of pots to prevent excessive lateral movement of the supper or second layer of pots.

Another group of thirty or other number of lidded pots in a 5 x 6 matrix (200mm or 8 inch pots) or array or in another array such as a 6x7 matrix (150 mm or 6 inch pots), is located immediately upon the second layer 236 of pots to form a third layer of pots 238 in which the bases of the third layer of pots are received in the depressions of respective lids of the lower second layer of pots 236 to further retain the pots in the stacked array and prevent excessive lateral movement of the pots with respect to one another. Spacers 147 further assist in retaining the pots in correct aligned stacked relationship by the edges or ends of spacers 147 being in abutting relationship or closely spaced relationship with the lower parts of the sidewalls of the pots to prevent radial or lateral movement of pots in one layer with respect to others in the same layer and also pots in one layer with respect to pots within other layers, particularly the layers immediately above and below the layer of pots.

Another group of thirty lidded pots is located upon the third layer of pots 238 to form a fourth layer of pots 240 in which the bases of each of the pots of the fourth layer 240 are received in the depressions of respective lids of the pots forming the third layer of pots 238.

Any number of layers of pots can be arranged to form the stacked array. However, the typical number of layers is from three to five layers, preferably four layers.

A second plate 210, referred to as intermediate plate 210B is located upon the upper surface of the fourth layer of pots 240 such that bosses 220 extending from the lower face of plate 210B are received in the depressions of respective lids of the pots forming the fourth layer of pots 240 to form a sandwich-like constructions of four layers of pots located between the upper surface of lower plate 210A and the lower surface of intermediate plate 210B.

A second stack of pots is formed on the first stack of pots. The second stack of pots which is similar to the first stack of pots comprises a second set of four layers of lidded pots located one upon the other in stacked relationship to each other is formed on the obverse face of plate 210b by the bases of the first layer of pots 242 of the second set or stack of pots being received in respective wells 212 of plate 210B and the bases of the relatively upper layer of pots of the second set or stack of pots being received in the depressions of the lids of the relatively lower layer of pots of the second stack of pots to form the second stack of pots in the form of another array of stacked pots four layers high in a manner similar to that of the lower stack of pots.

A third plate 210, referred to as upper plate 210C, is located on the collective tops of the lids of the uppermost layer 248 of lidded pots so that downwardly depending bosses 220 of upper plate 210C extend into and are received in the depressions of the lids of the uppermost layer of pots 248 of the second set or stack of pots. Thus, transportation module 230, is formed as a double sandwich construction in which a first set of 120 lidded pots are sandwiched between lower plate 210A and intermediate plate 210B to form one sandwich structure or stack of pots and a second set of 120 lidded pots are sandwiched between intermediate plate 210B and upper plate 210C to form a second sandwich structure or second stack of pots. The transport module is stable and able to resist movement during transportation by the engagement of the bases of the pots with wells 212 and the depressions of the lids and the engagement of the bosses 220 with the depressions of the lids in combination with spacers 147 to continue to limit the amount of lateral movement in all radial directions that each individual pot can undergo by being restrained and retained in place by a combination of pots in adjacent layers and plates.

Each plate 210 is provided with a multitude of cut-outs in the form of rebates or similar, 252 located at spaced apart locations along at least two sides, typically an opposed pair of sides, for receiving therein a strap 254 extending from one side of pallet 232 over the top of module 230 to the other side of pallet 232 as shown in Figure 21 to further assist in forming the stacked array of lidded pots into a stable module facilitating transportation of the lidded pots without the pots falling or toppling over or the like when being transported. In one form, strap 254 is a flexible band of material, such as for example of the type of material that is used to pack pallets such as a strap of flexible polymeric material forming strapping.

In other forms, cut outs or rebates 252 are located at spaced apart locations along all four sides of the pallet (not shown) and straps 254 extend from one side to the opposite side to cross over one another at right angles in the form of a grid or similar to further stabilise the pots in the transport module by preventing movement in a side to side direction and a backwards to frontwards movement. In one form there are 2 straps per side whereas in other forms there are 3 straps per side. In one form the straps are made from any suitable material for forming bands or banding around the stacked layers.

In one form, plate 210 is provided with three individual spaced apart cut-outs 252 along two sides of pallet 232. In one form, the cut-outs are located along all four sides of pallet 232.

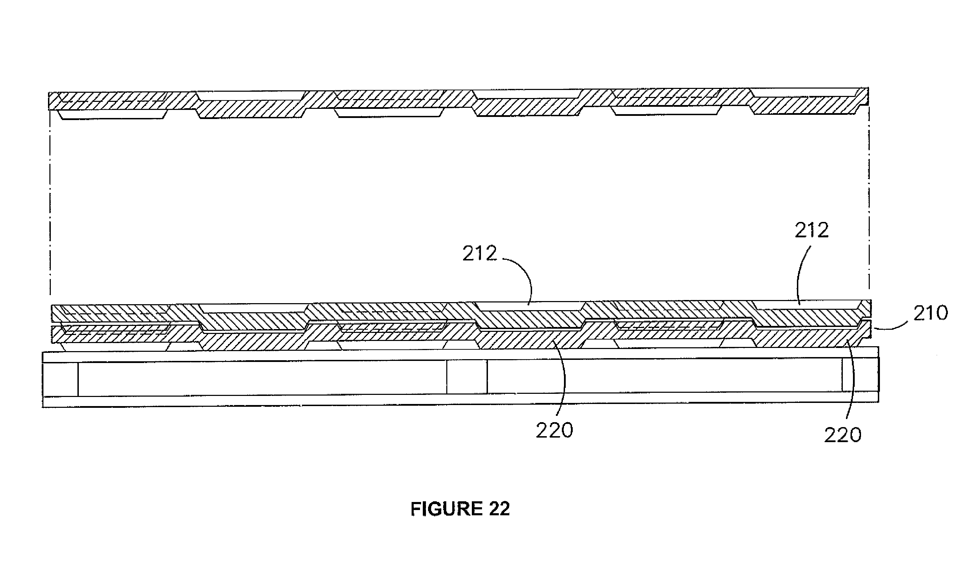

It is to be noted that the shape and configuration of plate 210 is such so as to allow plates 210 to be stacked on upon the other in a nested relationship to form a stacked array in which the bosses 220 of the upper plate are received in the wells of the lower plate to form a nested stacked array as shown more particularly in Figure 22, which occupies a minimum of space to allow back loading of the plates to the source of the plant pots after use.

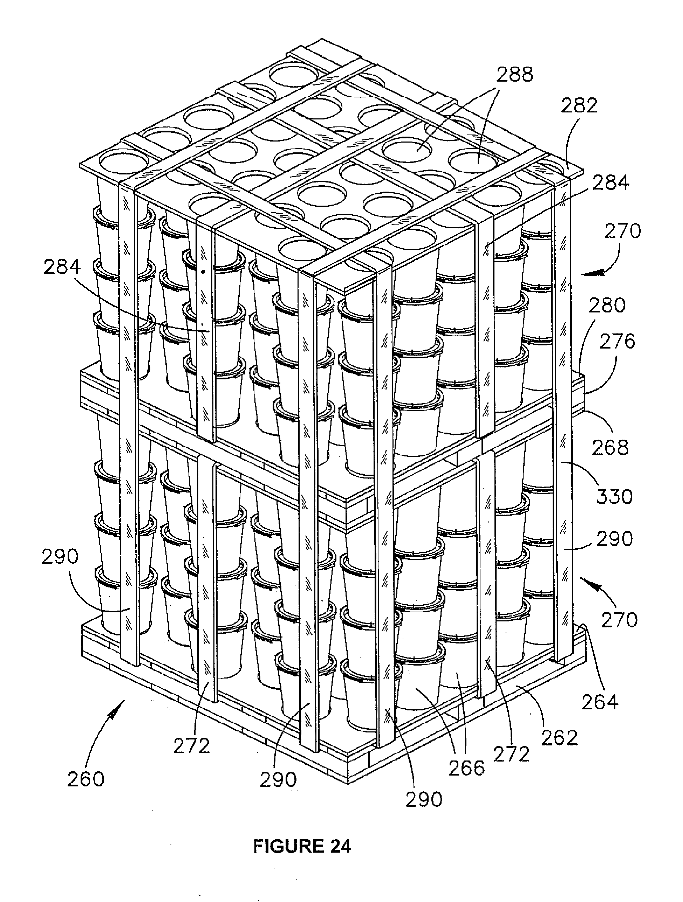

Another embodiment of the transport module will now be described with reference to Figures 24 to 28 which illustrate another embodiment of the transport module. In this form of the transport module, the first set or stack of lidded pots in vertical stacked relationship to each other are bound together by a first set of strapping as a separate unit or stack and the second set or stack of lidded pots is bound together by a second set of strapping as a separate unit and the two units stacked one upon the other are bound to each other. The benefit of having the two units stacked one upon the other in a single module is that the module can be transported to the nursery or plant farm as a single module which reduces cost and effort but on arrival at the potting station when a third set of strapping enveloping both stacks simultaneously, is removed, the second or upper stack can be removed as a unit by a group of workmen lifting the upper unit off the lower unit or by using lower powered machinery to mechanically lift the upper unit off the lower unit. Also by having a module of two units, the two units can be located at different sites on locations within the plant farm or nursery and worked upon simultaneously without having to complete planting of the upper unit of pots before access to the lower unit of pots is available.

With particular reference to Figure 24, this form of the transport module will be described now. Transport module 260 comprises lower pallet 262 for supporting the module. A lower plate 264 having a flat face and a face containing depressions is located on the upper surface of pallet 262 with the depressions facing upwards and the flat surface facing downwards. An array of stacked lidded pots 266 comprising four layers of pots is stacked upon lower plate 264. An upper plate 268 having a flat face and a face containing projections in the form of bosses is located on the tops of the lids of the uppermost layer of pots with the bosses extending downwards from the lower surface of plate 268 being received in the depressions of the lids collectively to form a single unit 270. One or more straps 272 are located around unit 270 to extend between pallet 262 and over top plate 268 at the top of unit 270. The number and location of straps 272 is determined by the requirements of transporting the units. In the illustrated embodiment of Figure 24, there is a strap on either side of module 270 so that there are two straps 272. In other embodiments, other numbers of straps can be used.

A second unit, upper unit 274 is located above lower unit 270 for transportation. The assemblage of upper unit 274 is the same as the assemblage of lower unit 270 in that unit 274 comprises a pallet 276, a lower plate 280, a stack of four layers of lidded pots, and an upper plate 282 around which one or more straps 284 are located to stabilise the unit. If required, further straps (not shown) can be located through each of the upper and lower pallets to maintain the units when located one above the other in a stable arrangement. In this arrangement, the upper unit 274 can be removed from the lower unit 270 as a single unit for transportation to another location within the nursery or plant farm.

A second set of straps is provided to cover both units 270, 274 and bind both units into a single module. In one form, there are two straps 290, on either side of the module in which each strap 290 extends from between lower pallet 262 along the vertical side of the module, over top plate 282 and along the opposite vertical side to complete a loop between pallet 262.

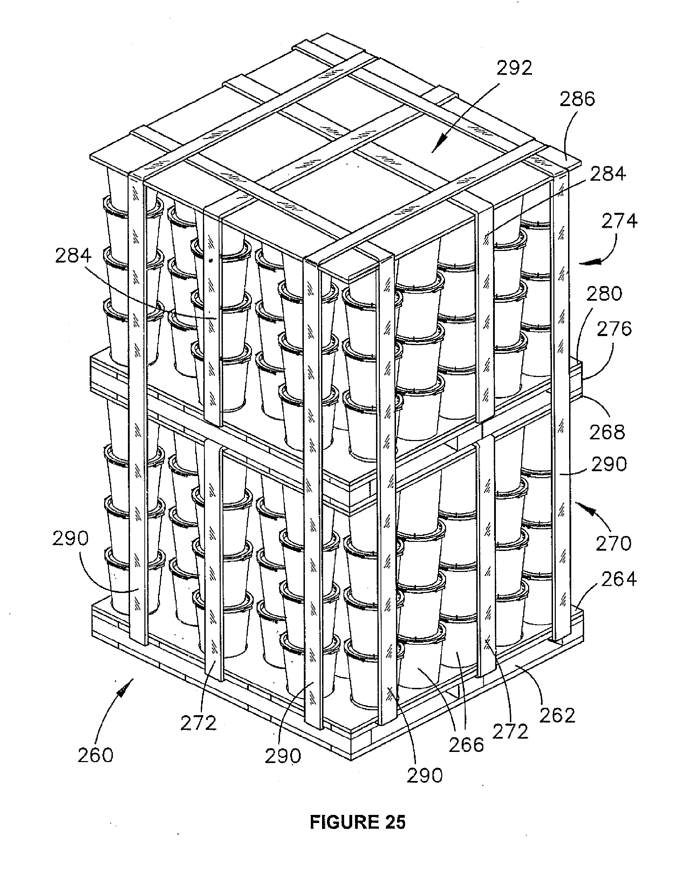

A modified form of the transport module 260 is illustrated in Figure 25. In this form of module, the top plate 286 is modified to have a flat top surface 292 rather than a multitude of depressions 288, as shown in Figure 24.

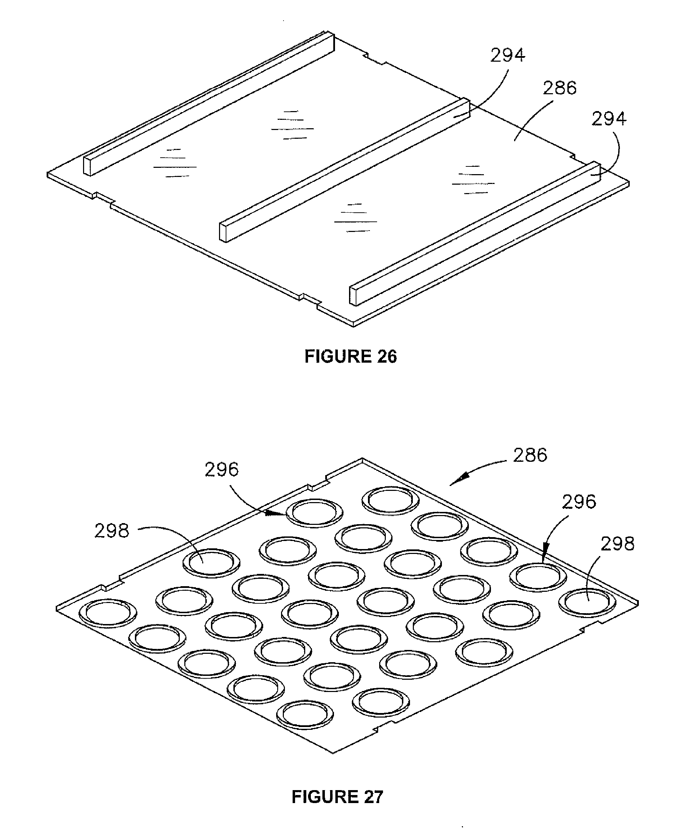

In figure 26 is a modified form of top plate 286. In this form, plate 286 is provided with a set of reinforcing braces 294 extending lengthways between opposite sides to provide strengthening for top plate 286. In one form, braces 294 are rectangular in profile. However, braces 294 can have any shape, size or profile. Although three such braces 294 are shown, plate 286 can be provided with any number of braces to suit transportation requirements.

Plate 286 in one form, is provided with modified projections on the lower surface in use as shown more particularly in Figure 27. This modified form of plate 286 is provided with a multiplicity of projections in the form of an annulus or similar arranged in a regularly repeating array on the lower surface in use. In one form, the projections are in the form of annular rings 296 in which the ring 296 forming the circumference of the projections is formed as a depression, groove, channel, rebate or the like in the lower surface of plate 286. The diameter of the channel or groove forming the ring 296 is about the same size as or slightly larger than the diameter of the lid fitted to the pot in stacked relationship. The flange of the lid is received in the circular channel forming the ring 296. The centre part or core 298 of the projection is on the same level as the level of the remainder of the surface of plate 286. Core 298 is received in the centrally located depression of the lid to assist in securely locating the lidded pots in stacked relationship within the transport module.

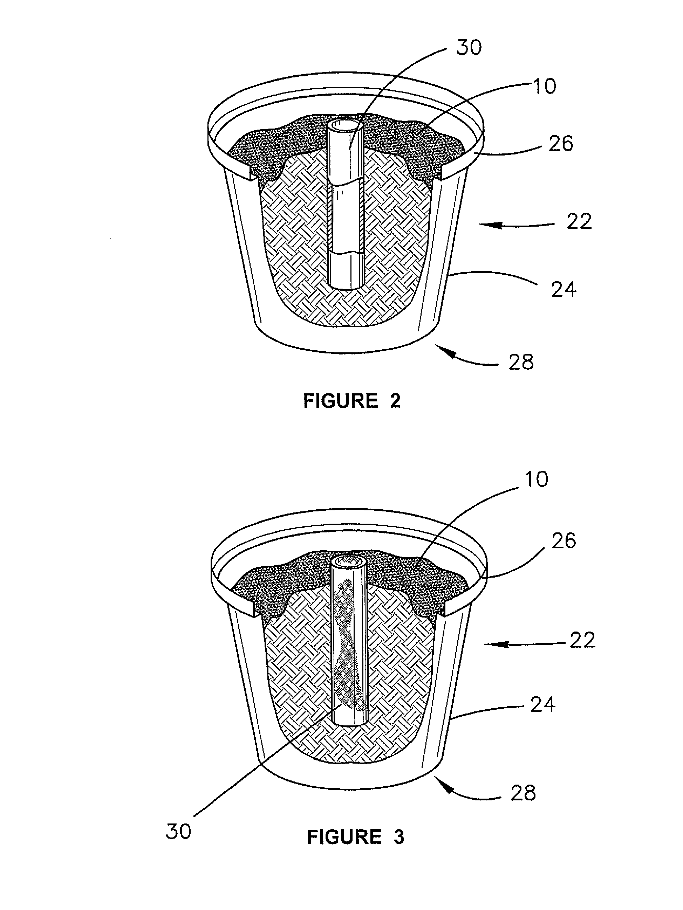

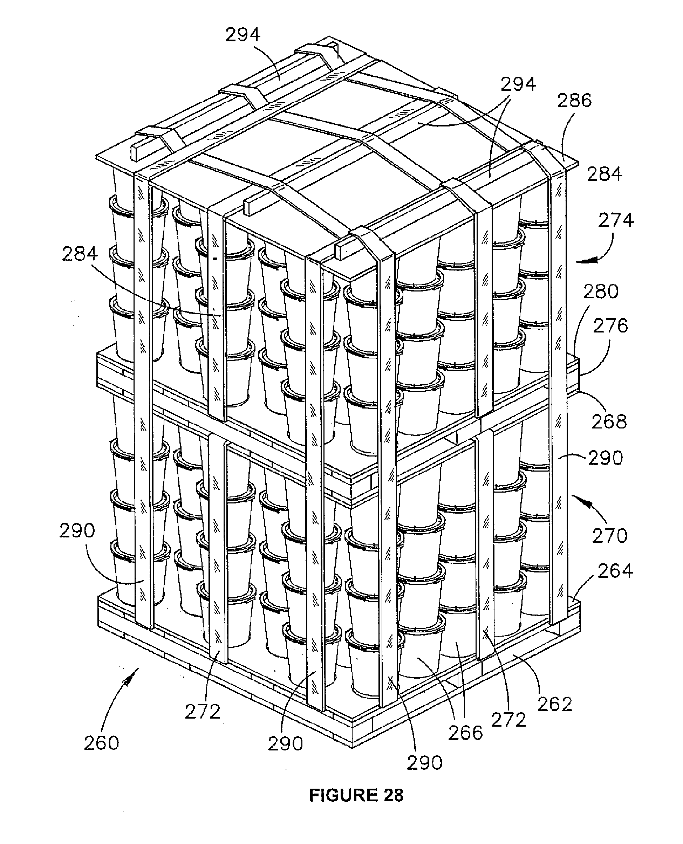

In Figure 28 is shown a transport module having plate 286 located at the top. In this form of the transport module, plate 286 is provided with three braces 294 located lengthwise across the plate. The lower surface is in accordance with Figure 2 and is provided with a multiplicity of rings.

Another aspect of the transporting of lidded pots containing a potting mixture provided with a preformed base or similar into which a plant or seedling is located is the removal of lids from the pot plants prior to planting. One step in the overall operation of transporting and planting is the need to remove the lids from the plants before the plants can be inserted into the preformed bore. Removing the lids manually one at a time is both labour intensive and time consuming and in many instances creates a limiting step in the overall efficiency of planting. Thus, there is a need to make the step of removing the lids more efficient. Efficiencies can be gained if more than one lid is removed simultaneously.

Accordingly, this aspect of the transportation system involves a device or system which allows multiple lids to be removed substantially simultaneously.

In one form, the multiple lid removal device is in the form of a plurality of separate devices which are capable of movement between two modes in which one mode is for contacting an individual lid and another mode is for securely attaching to the lid to allow the lid to be removed from the pot. In one form, the device is a mechanical device whereas in another form, the device is a pneumatically operable device.

In one form, the removal device is in the form of a suction cup having a plunger or similar operating element which, when in one mode, contacts one or more planar surfaces of the lid such that on moving to another mode, creates at least a partial vacuum or suction to attach the lid to the end of the removal device so that the lid can be displaced from the top of the pot.

In one form, the removal device includes an elongate carrier, typically in the form of a rod or tube, made typically of metal. A multitude of brackets, typically five brackets, which extend outwardly from one side of the elongate member is provided with a clamp in the form of a collar within which is located a neck or reduced sized portion of a handle for connecting the suction device to the elongate member. The suction device is provided with bellow or other hinged arrangement, such as for example, a concertina of rings interconnected by webbing allowing relative expansion or elongation of individual rings of the bellows to form a partial vacuum and contraction or collapsing of the rings towards each other when the removal device contacts the lids. A flexible skirt is provided around the circumference of the most distal ring of the bellows to provide a releasable seal between the lid and suction cup in use.

It is to be noted that any number of individual suction cups can be connected to the removal device. However, the number of individual suction cups corresponds to the number of individual lids located along one side of the matrix of a layer of lidded pots in the stacked array, such as a 5 x 6 matrix or the like. Further, the spacing of the individual suction cups corresponds to the spacing of the pots so that each of the suction cups contacts one of the lids.

In operation, the removal device is placed upon the lids with the flexible skirt in contact with the lid and the bellows in a relatively expanded condition. Force is applied to the elongate member to push on the suction cups to contract the bellows thereby forcing air from the interior of the cups. The flexible skirt forms a seal against the lid so that as the elongate member is lifted, all of the lids of the pots in contact with the suction cups are released from the pots and can be removed simultaneously. This reduces the time taken to open the pots in preparation for planting.

In another form, the removal device is a mechanical device rather than a pneumatic device. In one form, the mechanical device is in the form of a clamp or similar having a movable end that can move between an expanded position and a contracted position. When in the contracted position, the operable ends of the device being relatively closer together allow the device to be inserted into the well of the lid corresponding to the former. When in this inserted condition, the operative end bears against the inner walls of the former to provide an interference fit or the like. In one embodiment, the inner wall of the former is provided with a ridge, indent, groove or similar for the operable ends of the device to engage to more positively locate the ends against the walls to more securely hold the device against the lid. In this position, the device is moved upwardly away from the pot to release the lid from the pot and to remove the lid from the pot. Again, the number and spacing apart of the individual devices corresponds to the number and spacing of the pots so that each device engages with one lid along one row of pots along a side of the layer of pots.

When the lid has been removed, the device is operated to retreat the operable ends to move them relatively closer to one another so as to move the device to a retracted position in which there is clearance between the inner walls of the former and the operable ends of the device which in turn releases the lid from the device and thus frees the lid.

In one form, all of the lids are released substantially simultaneously. Other forms and arrangements of the mechanical device are possible. Another form of the removal device (not shown) is a substantially tapered solid plug having at least one, preferably two resilient members located part way along the length of the plug. In one form, the resilient members are O-rings located circumferentially around the plug. In use, the plug is inserted into the well of the lid to form an interference fit. In one form, the shape or profile of the plug is circular. However, any suitable shape is possible. Operation of the plug is similar to operation of the other removal devices previously described.

Another form of the removal device contacts the rim of the lid to lift at least one part of the rim away from the rim of the pot in order to begin to release the lid from the pot and remove the lid.

The advantage of the container of the present invention is that the grower need not have elaborate planting machinery or a planting installation for adding measured amounts of compost or potting mix to the individual pots and then forming a cavity and planting the plant in the cavity but rather is provided with a pot to which compost has previously been added and a void formed so that all a grower need do is either remove the former and add the plant or merely add the plant to the former and/or cavity and the pot is available for sale and distribution. This reduces the amount of inventory, machinery, labour and the like required of the grower and allows the grower to purchase pots already filled with compost or potting mix and having a cavity, in which the potting mix is customised formulated to the particular requirements of the plant.

The described arrangement has been advanced by explanation and many modifications may be made without departing from the spirit and scope of the invention which includes every novel feature and novel combination of features herein disclosed.

Those skilled in the art will appreciate that the invention described herein is susceptible to variations and modifications other than those specifically described. It is understood that the invention includes all such variations and modifications which fall within the scope as defined by the appended claims.

## Claims

1. A closure for a container (170, 218, 266) in which the closure interacts with a first container and a second container when the two containers are in stacked relationship one above the other, the closure for sealing the first container and for locating the base of the second container with respect to the first container, wherein the containers are planter pots (170, 218, 266) for containing plant growing materials, **characterised in that** the closure comprises a cover portion (112) having a former (116) for forming and maintaining a void within the contents of the container (170, 218, 266) when the container (170, 218, 266) is provided with contents, and the former (116) contacts the contents of the container (170, 218, 266), an edge portion (114) located at or towards the peripheral portion of the closure for facilitating sealing of the container (170, 218, 266) and for locating the first container with respect to at least one other container in an array of similar containers, and at least one spacer member (147) for guiding the positioning of the second container with respect to the first container when the first and second containers are in stacked relationship with the base of the second container located on the first container to facilitate formation of an array or assemblage of the first and second containers as part of an array of similar containers for transportation of the containers in a module (230, 260) of similar containers in which the containers are stably mounted in stacked relationship with each other during transportation of the module (230, 260) and the former (116) is in contact with the contents of the container (170, 218, 266).

2. A closure according to claim 1 in which the void formed by the former (230, 260) in the contents of the container (170, 218, 266) is centrally located within the container about the central axis of the container.

3. A closure according to claim 1 or 2 in which the closure is in the form of a lid (110), cover, cap, seal, top covering or top.

4. A closure according to claim 3 in which the lid (110) is substantially circular being in the form of a substantially disc like arrangement having an outer portion (112) which is planar and an inner portion having a depression or well in which the depression or well is in the shape of the former (116) for forming the void within the contents of the container.

5. A closure according to any one of claims 1 to 4 in which the former (116) is centrally located on the underside (111) or interior face of the cover portion (112) of the lid (110) in which the former (116) extends from the internal surface or lower surface in use to extend into the interior of the container (170, 218, 266) when the lid (110) is sealingly located on the top of the container (170, 218, 266).

6. A closure according to any one of claims 1 to 5 in which the undersurface (111) of the closure is provided with strengthening elements (122) extending radially from a position inboard of the edge portion to the former (116).

7. A closure according to any one of claims 1 to 6 in which the cover portion (112) is substantially curved out of the plane so that the portion (120) of the cover portion having the former (116) extends more outwardly than the portion of the cover adjacent the edge portion (118).

8. A closure according to any one of claims 1 to 7 in which the former (116) is in the form of a tube or well located in the centre of the cover (112) in which the tube or well is substantially cylindrical or of a generally rectilinear profile having curved longitudinally extending edges between adjacent sides.

9. A closure according to any one of claims 1 to 8 in which the edge portion of the peripheral portion of the closure is a rim (114) of the closure in which the rim (114) is substantially U-shaped in profile or cross-section comprising an inner wall (142), an outer wall (146), and a shelf (144) spanning the inner and outer wall for defining the generally U-shaped opening in the form of a groove, rebate, channel, chamber or concavity in which the rim (114) of the container (170, 218, 266) is received within the U-shaped opening to sealingly attach the closure to the container (170, 218, 266).

10. A closure according to any one of claims 1 to 9 in which the spacer member is a multitude of spacers (147) located in spaced apart relationship to each other around the inner surface of the rim (114) of the closure for guiding the base of the second container to be substantially centrally located on the closure so as to position the second container in alignment with the first container in order to reduce or eliminate movement of the containers (170, 218, 266) with respect to each other during transportation of the containers in the stacked array to improve the stability of the array of stacked containers for transportation.

11. A closure according to any one of claims 1 to 10 in which the spacer elements (147) are substantially planar and are oriented to extend substantially radially inwards from the rim (114) of the closure.

12. A transport module (230, 260) having a multitude of separate combinations of closures and containers (170, 218, 266) in stacked relationship with each other, in which each container is a planter pot (22, 32, 62, 170, 218, 266) containing plant growing material and the closure is in accordance with any one of claims 1 to 11, the module (230, 260) comprising a support (232, 262, 276) for supporting the module, a first retaining member (210, 210A, 264) locatable upon the support, said first retaining member having a multitude of first retaining elements (212) for retaining a first layer of the containers and closures in place on the first retaining member, and a second retaining member (210, 210B, 268, 280) having a multitude of second retaining elements (220) for retaining respective ones of a second layer of the containers and closures wherein the first and second layers of containers and closures are located intermediate the first and second retaining members so that the first and second retaining elements (212, 220) cooperatively interact with the respective layers of containers and closures to maintain the layers of containers and closures in stacked relationship to each other.

13. A transport module (230, 260) according to claim 12 further comprising a third retaining member (210, 210C, 282, 286) having a multitude of second retaining elements (220, 298) for retaining respective ones of a third layer of containers and closures, wherein the second retaining member is located intermediate the first and third retaining members to retain layers of containers and closures in stacked relationship one upon the other to form the transport module (230, 260) for facilitating transportation of the stacked containers.

14. A transport module (230, 260) according to claim 12 or 13 in which the first set of retaining elements located on one face of the first retaining member (212, 288) are voids, cut-outs, apertures, holes, depressions, grooves, rebates or channels for receiving at least a part of the base of the container/closure combination therein.

15. A transport module (230, 260) according to any one of claims 12 to 14 in which the second retaining elements (220, 298) located on one face of the second retaining members are rings, annuli or circles having a first part which is the form of a void, cut-out, aperture, hole, depression, groove, rebate or channel, and a second part in the form of a projection which extends outwardly of the first part, in which the rim (114) of the closure of the container/closure combination is received in the first part to prevent undue unwanted movement of the container in order to retain stability of the array of containers within the module during transportation of the stacked array of container.

## Patentansprüche

1. Verschluss für einen Behälter (170, 218, 266), wobei der Verschluss mit einem ersten Behälter und einem zweiten Behälter zusammenwirkt, wenn sich die beiden Behälter in einer aufeinander gestapelten Beziehung befinden, wobei der Verschluss zum Abdichten des ersten Behälters und zum Platzieren der Basis des zweiten Behälters in Bezug auf den ersten Behälter dient, wobei die Behälter Pflanzentöpfe (170, 218, 266) zur Aufnahme von Materialien zum Anbau von Pflanzen sind, **dadurch gekennzeichnet, dass** der Verschluss Folgendes umfasst: einen Abdeckabschnitt (112), der einen Formgeber (116) aufweist, um in dem Inhalt des Behälters (170, 218, 266) einen Hohlraum zu bilden und zu bewahren, wenn der Behälter (170, 218, 266) mit einem Inhalt versehen ist und der Formgeber (116) mit dem Inhalt des Behälters (170, 218, 266) in Kontakt steht, einen Randabschnitt (114), der sich an dem Umfangsbereich des Verschlusses oder in dessen Nähe befindet, um das Abdichten des Behälters (170, 218, 266) zu erleichtern und den ersten Behälter in Bezug auf wenigstens einen anderen Behälter in einer Anordnung von gleichartigen Behältern zu platzieren, und wenigstens ein Abstandshalteelement (147), um die Positionierung des zweiten Behälters in Bezug auf den ersten Behälter zu leiten, wenn sich der erste und der zweite Behälter in einer gestapelten Beziehung, bei der die Basis des zweiten Behälters auf dem ersten Behälter angeordnet ist, befinden, um die Bildung einer Anordnung oder eines Verbunds des ersten und zweiten Behälters als Teil einer Anordnung von gleichartigen Behältern zum Transport der Behälter in einem Modul (230, 260) von gleichartigen Behältern, in dem die Behälter während des Transports des Moduls (230, 260) stabil in einer untereinander gestapelten Beziehung angebracht sind und der Formgeber (116) mit dem Inhalt des Behälters (170, 218, 266) in Kontakt steht, zu erleichtern.

2. Verschluss nach Anspruch 1, wobei der Hohlraum, der durch den Formgeber (230, 260) in dem Inhalt des Behälters (170, 218, 266) gebildet wird, um die Mittelachse des Behälters zentral in dem Behälter angeordnet ist.

3. Verschluss nach Anspruch 1 oder 2, wobei der Verschluss die Form eines Deckels (110), einer Abdeckung, einer Kappe, einer Versiegelung, einer oberen Abdeckung oder eines Kopfstücks aufweist.

4. Verschluss nach Anspruch 3, wobei der Deckel (110) im Wesentlichen kreisförmig ist und im Wesentlichen die Form einer scheibenartigen Anordnung aufweist, die einen äußeren Abschnitt (112), der flach ist, und einen inneren Abschnitt mit einer Vertiefung oder Senke aufweist, wobei die Vertiefung oder Senke die Form des Formgebers (116) zur Bildung des Hohlraums in dem Inhalt des Behälters aufweist.

5. Verschluss nach einem der Ansprüche 1 bis 4, wobei der Formgeber (116) zentral an der Unterseite (111) oder Innenfläche des Abdeckabschnitts (112) des Deckels (110) angeordnet ist, wobei sich der Formgeber (116) bei Verwendung so von der Innenfläche oder der unteren Fläche erstreckt, dass er in das Innere des Behälters (170, 218, 266) verläuft, wenn der Deckel (110) abdichtend an der Oberseite des Behälters (170, 218, 266) angeordnet ist.

6. Verschluss nach einem der Ansprüche 1 bis 5, wobei die untere Fläche (111) des Verschlusses mit Verstärkungselementen (122) versehen ist, die sich von einer Position an der Innenseite des Randabschnitts radial zu dem Formgeber (116) erstrecken.

7. Verschluss nach einem der Ansprüche 1 bis 6, wobei der Abdeckabschnitt (112) im Wesentlichen so aus der Ebene gebogen ist, dass sich jener Abschnitt (120) des Abdeckabschnitts (112), der den Formgeber (116) aufweist, weiter als der Abschnitt der Abdeckung neben dem Randabschnitt (118) nach außen erstreckt.

8. Verschluss nach einem der Ansprüche 1 bis 7, wobei der Formgeber (116) die Form einer Röhre oder einer Senke aufweist, die sich in der Mitte der Abdeckung (112) befindet, wobei die Röhre oder Senke ein im Wesentlichen zylinderförmiges oder im Allgemeinen geradliniges Profil mit gebogenen längs verlaufenden Kanten zwischen benachbarten Seiten aufweist.

9. Verschluss nach einem der Ansprüche 1 bis 8, wobei der Randabschnitt des Umfangsabschnitts des Verschlusses ein Rand (114) des Verschlusses ist, wobei der Rand (114) im Profil oder Querschnitt im Wesentlichen U-förmig ist und eine Innenwand (142), eine Außenwand (146) und eine Ablage (144), die die Innen- und die Außenwand überbrückt, um die im Allgemeinen U-förmige Öffnung in der Form einer Nut, einer Ausfalzung, eines Kanals, einer Kammer oder einer Konkavität zu definieren, umfasst, wobei der Rand (114) des Behälters (170, 218, 266) in der U-förmigen Öffnung aufgenommen wird, um den Verschluss abdichtend an dem Behälter (170, 218, 266) anzubringen.

10. Verschluss nach einem der Ansprüche 1 bis 9, wobei es sich bei dem Abstandshalterelement um mehrere Abstandshalter (147) handelt, die in einer voneinander beabstandeten Beziehung um die Innenfläche des Rands (114) des Verschlusses angeordnet sind, um die Basis des zweiten Behälters so zu führen, dass sie im Wesentlichen zentral auf dem Verschluss angeordnet wird, damit der zweite Behälter in einer Ausrichtung mit dem ersten Behälter positioniert wird, um eine Bewegung der Behälter (170, 218, 266) in Bezug zueinander während des Transports der Behälter in der gestapelten Anordnung auf ein Mindestmaß zu verringern oder auszuschließen, um die Stabilität der Anordnung von gestapelten Behältern für den Transport zu verbessern.

11. Verschluss nach einem der Ansprüche 1 bis 10, wobei die Abstandshalterelemente (1471) im Wesentlichen flach sind und so ausgerichtet sind, dass sie sich von dem Rand (114) des Verschlusses im Wesentlichen radial einwärts erstrecken.

12. Transportmodul (230, 260) mit mehreren separaten Kombinationen von Verschlüssen und Behältern (170, 218, 266) in einer untereinander gestapelten Beziehung, wobei jeder Behälter ein Pflanzentopf (22, 32, 62,170, 218, 266) ist, der ein Material zum Anbau von Pflanzen enthält, und der Verschluss einem der Ansprüche 1 bis 11 entspricht, wobei das Modul (230, 260) einen Träger (232, 262, 276) zum Tragen des Moduls, ein erstes Halteteil (210, 210A, 264), das auf dem Träger angeordnet werden kann, wobei das erste Halteteil mehrere erste Halteelemente aufweist, um eine erste Schicht der Behälter und Verschlüsse auf dem ersten Halteteil in Position zu halten, und ein zweites Halteteil (210, 210B, 268, 280) umfasst, das mehrere zweite Halteelemente (220) zum Halten von entsprechenden aus einer zweiten Schicht der Behälter und Verschlüsse aufweist, wobei sich die erste und die zweite Schicht von Behältern und Verschlüssen so zwischen dem ersten und dem zweiten Halteteil befinden, dass die ersten und zweiten Halteelemente (212, 220) kooperativ mit den jeweiligen Schichten von Behältern und Verschlüssen zusammenwirken, um die Schichten von Behältern und Verschlüssen in einer untereinander gestapelten Beziehung zu halten.

13. Transportmodul (230, 260) nach Anspruch 12, ferner umfassend ein drittes Halteteil (210, 210C, 282, 286) mit mehreren zweiten Halteelementen (220, 298) zum Halten von entsprechenden aus einer dritten Schicht von Behältern und Verschlüssen, wobei sich das zweite Halteteil zwischen dem ersten und dem dritten Halteteil befindet, um Schichten von Behältern und Verschlüssen in einer aufeinander gestapelten Beziehung zu halten, um das Transportmodul (230, 260) zur Erleichterung des Transports der gestapelten Behälter zu bilden.

14. Transportmodul (230, 260) nach Anspruch 12 oder 13, wobei es sich bei dem ersten Satz von Halteelementen, die sich an einer Fläche des ersten Halteteils (212, 288) befinden, um Hohlräume, Ausschnitte, Öffnungen, Löcher, Vertiefungen, Rillen, Ausfalzungen oder Kanäle handelt, um darin wenigstens einen Teil der Basis der Kombination aus dem Behälter und dem Verschluss aufzunehmen.

15. Transportmodul (230, 230) nach einem der Ansprüche 12 bis 14, wobei es sich bei den zweiten Halteelementen (220, 298), die sich an einer Fläche der zweiten Halteteile befinden, um Ringe, Kreisringe oder Kreise handelt, die einen ersten Teil, der die Form eines Hohlraums, eines Ausschnitts, einer Öffnung, eines Lochs, einer Vertiefung, einer Rille, einer Ausfalzung oder eines Kanals aufweist, und einen zweiten Teil in der Form eines Vorsprungs, der außerhalb des ersten Teils verläuft, aufweisen, wobei der Rand (114) des Verschlusses der Kombination aus dem Behälter und dem Verschluss in dem ersten Teil aufgenommen wird, um eine unzulässige unerwünschte Bewegung des Behälters zu verhindern, um die Stabilität der Anordnung von Behältern in dem Modul während des Transports der gestapelten Anordnung von Behältern zu bewahren.

## Revendications

1. Fermeture de récipient (170, 218, 266) où la fermeture interagit avec un premier récipient et un deuxième récipient lorsque les deux récipients sont empilés l'un au-dessus de l'autre, la fermeture étant destinée à sceller le premier récipient et à localiser la base du deuxième récipient par rapport au premier récipient, où les récipients sont des pots de fleur (170, 218, 266) destinés à contenir des matériaux pour la croissance de plantes, **caractérisée en ce que** la fermeture comprend une partie de couverture (112) ayant une forme (116) permettant de créer et de maintenir un vide dans le contenu du récipient (170, 218, 266) lorsque le récipient (170, 218, 266) est muni d'un contenu, et la forme (116) est en contact avec le contenu du récipient (170, 218, 266), une partie de bord (114) située sur ou près de la partie périphérique de la fermeture pour faciliter le scellement du récipient (170, 218, 266) et pour localiser le premier récipient par rapport à au moins un autre récipient dans une rangé&e de récipients similaires, et au moins un élément espaceur (147) pour guider le positionnement du deuxième récipient par rapport au premier récipient lorsque le premier et le deuxième récipient sont empilés avec la base du deuxième récipient située sur le premier récipient pour faciliter la formation un rangée ou d'un ensemble des premier et deuxième récipients en tant que partie d'une rangée de récipients similaires pour le transport des récipients dans un module (230, 260) de récipients similaires, où les récipients sont empilés de manière stable les uns avec les autres pendant le transport du module (230, 260) et la forme (116) est en contact avec le contenu du récipient (170, 218, 266).

2. Fermeture selon la revendication 1, où le vide formé par la forme (230, 260) dans le contenu du récipient (170, 218, 266) est localisée au centre du récipient, atour de l'axe central du récipient.

3. Fermeture selon la revendication 1 ou 2, où la fermeture à la forme d'un couvercle (110), d'une couverture, d'une coiffe, d'un dessus couvrant ou d'un dessus.

4. Fermeture selon la revendication 3, où le couvercle (110) est sensiblement circulaire, sous forme d'un arrangement de type disque ayant une partie extérieure (112) qui est plane et une partie intérieure ayant une dépression ou un puits, où la dépression ou le puits à la forme de la forme (116) pour créer le vide dans le contenu du récipient.

5. Fermeture selon l'une quelconque des revendications 1 à 4, où la forme (116) est située au centre sur la face inférieure (111) ou intérieure de la partie de couverture (112) du couvercle (110), où la forme (116) s'étend depuis la face interne ou la face inférieure à l'usage vers l'intérieur du récipient (170, 218, 266) lorsque le couvercle (110) est placé sur le haut du récipient (170, 218, 266).

6. Fermeture selon l'une quelconque des revendications 1 à 5, où la surface inférieure (111) de la fermeture est munie d'éléments de renforcement (122) s'étendant de manière radiale depuis une position interne de la partie de bord de la forme (116).

7. Fermeture selon l'une quelconque des revendications 1 à 6, où la partie de couverture (112) est sensiblement courbée par rapport au plan de sorte que la partie (120) de la partie de couverture ayant la forme (116) s'étend de manière plus extérieure que la partie de la couverture adjacente à la partie de bord (118).

8. Fermeture selon l'une quelconque des revendications 1 à 7, où la forme (116) est un tube ou un puits situé au centre de la couverture (112), où le tube ou puits est sensiblement cylindrique ou a un profil sensiblement rectiligne avec des bords longitudinaux courbés entre les côtés adjacents.

9. Fermeture selon l'une quelconque des revendications 1 à 8, où la partie de bord de la partie périphérique de la fermeture est une bordure (114) de la fermeture où la bordure (114) a un profil sensiblement en forme de U ou une coupe transversale comprenant une paroi interne (142), une paroi externe (146) et une plate-forme (144) s'étendant de la paroi interne à la paroi externe pour définir l'ouverture en forme de U comme une rainure, un rabats, un canal, une chambre ou une concavité, dans laquelle la bordure (114) du récipient (170, 218, 266) est réceptionnée pour attacher fermement la fermeture au récipient (170, 218, 266).

10. Fermeture selon l'une quelconque des revendications 1 à 9, où l'élément espaceur est une multitude d'espaceurs (147) situés de manière distante les uns par rapport aux autres autour de la surface interne de la bordure (114) de la fermeture pour guider la base du deuxième récipient et qu'elle soient sensiblement centrée sur la fermeture et positionner le deuxième récipient en alignement avec le premier récipient afin de réduire ou d'éliminer les mouvements des récipients (170, 218,266) les uns par rapport aux autres pendant le transport des récipients dans la rangée empilée et améliorer la stabilité de la rangée de récipients empilés pour le transport.

11. Fermeture selon l'une quelconque des revendications 1 à 10, où les éléments espaceur (147) sont sensiblement plans et sont orientés pour s'étendre de manière sensiblement radiale vers l'intérieur depuis la bordure (114) de la fermeture.

12. Module de transport (230, 260) ayant une multitude de combinaisons séparées de fermetures et de récipients (170, 218, 266) en relation d'empilement les uns avec les autres, où chaque récipient est un pot de fleur (22, 32, 62, 170, 218 266) contenant un matériau pour la croissance des plantes et la fermeture est conforme à l'une quelconque des revendications 1 à 11, le module (230, 260) comprenant un support (232, 262, 276) pour supporter le module, un premier élément de rétention (210, 210A, 264) situé sur le support, ledit premier élément de rétention ayant une multitude de premiers éléments de rétention (212) pour retenir une première couche de récipients et de fermetures sur le premier élément de rétention, et un deuxième élément de rétention (210, 210B, 268,280) ayant une multitude de deuxièmes éléments de rétention (220) pour retenir une deuxième couche de récipients et de fermetures, où les première et deuxième couches de récipients et de fermetures sont situées entre les premier et deuxième éléments de rétention de sorte que les premier et deuxième éléments de rétention (212, 220) interagissent par coopération avec les couches respectives des récipients et des fermetures pour maintenir les couches des récipients et des fermetures en une relation d'empilement les unes par rapport aux autres.

13. Module de transport (230, 260) selon la revendication 12, comprenant en outre, un troisième élément de rétention (210, 210C, 282, 286) ayant une multitude de deuxième éléments de rétention (220, 298) pour retenir une troisième couche de récipients et de fermetures, où le deuxième élément de rétention se situe entre le premier et le troisième élément de rétention pour retenir les couches de récipients et de fermetures en relation d'empilement les uns sur les autres, former le module de transport (230, 260), et faciliter le transport des récipients empilés.

14. Module de transport (230, 260) selon la revendication 12 ou 13, où le premier jeu d'éléments de rétention situés sur une face du premier élément de rétention (2312, 288) sont des vides, des découpes, des ouvertures, des trous, des dépressions, des rainures, des rabats ou des canaux pour réceptionner au moins une partie de la base de la combinaison récipient/fermeture dans celui-ci.

15. Module de transport (230, 260) selon l'une quelconque des revendications 12 à 14, où les deuxièmes éléments de rétention (220, 298) situés sur une face des deuxièmes éléments de rétention sont des anneaux ou des cercles ayant une première partie qui forme un vide, une découpe, une ouverture, un trou, une dépression, une rainure, un rabat ou un canal, et une deuxième partie sous forme d'une projection qui s'étend vers l'extérieur de la première partie, où la bordure (114) de la fermeture de la combinaison récipient/fermeture est réceptionnée dans la première partie pour prévenir un mouvement non souhaité du récipient afin de conserver la stabilité de la rangée de récipients dans le module pendant le transport de la rangée empilée de récipients.
